# EUROPÄISCHE PATENTANMELDUNG

(11) **EP 2 223 904 A2**
(43) Veröffentlichungstag der Anmeldung: **01.09.2010**
(21) Anmeldenummer: 10151025.3
(22) Anmeldetag: 19.01.2010
(51) Int. Cl.: C04B 26/02

(54) **Verfahren zur Herstellung von antistatisch ausgerüsteten Kunststeinen für Flächengebilde**

(30) Priorität: 05.02.2009 DE 102009000641
(71) Anmelder: Evonik Goldschmidt GmbH, 45127 Essen (DE)
(72) Erfinder: Herzog, Harald, 63791, Karlstein (DE); Schwab, Peter, 45133, Essen (DE); Naumann, Matthias, Greensboro, NC 27407 (US)

(57) **Zusammenfassung**

Kunststeine für Flächengebilde mit antistatischen Eigenschaften, die als antistatische Komponente ionische Flüssigkeiten oder Lösungen von Metallsalzen in ionischen Flüssigkeiten enthalten, deren Verwendung sowie ein Verfahren zu deren Herstellung.

## Beschreibung

In der Regel sind Flächengebilde elektrische Isolatoren, auf denen sich bei der Herstellung, Verarbeitung und dem Gebrauch daraus hergestellter Gegenstände hohe Oberflächenladungen ansammeln können.

Unter den als Flächengebilden ausgebildeten Kunststeinen im Rahmen dieser Erfindung sind alle Gegenstände mit zumindest einer als Oberfläche dienenden (sichtbaren) Fläche zu verstehen, die beispielsweise in Form von Fliesen und/oder sonstige Boden-, W a n d-, Tisch- oder auch Deckenbeschichtungen zur Herstellung einer festen, flächigen Beschichtung eines Untergrunds geeignet sind.

Statische Aufladungen führen zu unerwünschten Effekten und ernsten Gefahrensituationen, welche von der Anziehung von Staub, der Anhaftung von hygienisch bedenklichen Verunreinigungen, der Zerstörung elektronischer Bauteile durch Funkenüberschläge, physiologisch unangenehmen elektrischen Schlägen, Entzündung brennbarer Flüssigkeiten in Behältern oder Rohren in denen diese gerührt, gegossen, gefördert und gelagert werden, bis hin zu Staubexplosionen, beispielsweise beim Umfüllen von mit Stäuben gefüllten Großgebinden, reichen. Die unerwünschte elektrostatische Ansammlung von Staub an der Oberfläche von Verkleidungsmaterialien und Beschichtungsstoffen kann unter Einwirkung mechanischer Belastungen zu einem schnelleren Zerkratzen und somit kürzeren Nutzungsdauer der Gebrauchsgegenstände führen.

Es besteht daher großes Interesse, statische Aufladungen dieser Materialien zu verhindern oder auf ein ungefährliches Maß zu minimieren.

Eine allgemein angewandte Methode, das Ableiten von Ladungen zu ermöglichen und die statische Aufladung zu minimieren, ist der Einsatz von Beschichtungen in Form von Antistatika, d.h. nichtionischen oder ionischen grenzflächenaktiven Verbindungen und insbesondere Ammonium-und Alkalimetallsalzen, wobei diese im Wesentlichen in Form von äußeren und inneren Antistatika eingesetzt werden.

Äußere Antistatika werden als wässrige oder alkoholische Lösungen durch Sprühen, Aufstreichen oder Tauchen und anschließender Lufttrocknung auf die Oberfläche der Beschichtungsstoffe aufgetragen. Der verbleibende antistatische Film ist auf fast allen Oberflächen wirksam, hat aber den Nachteil, dass er durch Reibung oder Flüssigkeit sehr leicht und ungewollt wieder entfernt wird.

Im Gegensatz zu den inneren Antistatika mit aus dem Inneren der plastischen Polymerbasis der Beschichtungsstoffe nachmigrierenden Antistatikamoleküle weisen externe Antistatika aufgrund des fehlenden Depoteffektes keine Langzeitwirkung auf. Daher werden vorzugsweise innere Antistatika verwendet, welche den Beschichtungsstoffen soweit wie möglich in reiner Form oder in Form von konzentrierten Formulierungen zugesetzt werden. Nach der zumeist mechanischen Einarbeitung in die Beschichtungsstoffe sind die inneren Antistatika homogen verteilt, so dass sie in der resultierenden Schicht überall ihre Wirkung entfalten und nicht nur an der Grenzfläche zur Luft vorhanden sind.

Nach heutigen, durch Versuchen belegten Vorstellungen, migrieren die Antistatika aufgrund einer inhärenten Unverträglichkeit kontinuierlich an die Oberflächen der Beschichtungsstoffe und reichern sich dort an, bzw. ersetzen Verluste. Sie haben oft nur geringe Wechselwirkung mit der Matrix, das heißt, die Wechselwirkung ist groß genug um nicht zu separieren, aber nicht zu stark um die Migration an die Oberfläche zu vermeiden. Der hydrophobe Teil verbleibt dabei in den Beschichtungsstoffen, der hydrophile Teil bindet z.B. in der Atmosphäre befindliches Wasser und bildet eine leitende Schicht, welche Ladungen bereits bei einigen zehn oder hundert Volt und nicht erst bei gefährlichen einigen tausend Volt an die Atmosphäre ableiteten kann. Auf diese Weise wird gewährleistet, dass sich über einen längeren Zeitraum eine wirksame Menge Antistatika an der Oberfläche befindet.

Die Migrationsrate (Diffusionsgeschwindigkeit) ist jedoch bei diesem Konzept ein kritischer Faktor: Ist sie zu groß, können sich (z.B. kristalline) Strukturen niedriger Energie ausbilden, welche die Fähigkeit, Feuchtigkeit zu binden, verlieren und dadurch den Antistatikeffekt deutlich reduzieren und an der Oberfläche unerwünschte Schmierfilme erzeugen, mit allen damit verbundenen ästhetischen und verarbeitungstechnischen Nachteilen, wobei auch die Wirksamkeit gefährdet ist.

Ist die Migrationsrate zu gering, wird keine oder keine in praxisgerechten Zeiten ausreichende Wirkung erzielt.

Es werden daher bereits Kombinationen aus schnell und langsam migrierenden Antistatika eingesetzt, um bei einer ausreichend schnellen Anfangswirkung auch eine über Wochen und Monate anhaltende Langzeitwirkung zu erzielen.

Typische, nicht antistatisch ausgerüstete Beschichtungsstoffe haben Oberflächenwiderstände im Bereich von 10¹⁴ bis 10¹¹ Ohm und können daher Spannungen von bis zu 15.000 Volt aufbauen. Wirksame Antistatika sollten daher die Oberflächenwiderstände der Verkleidungsmaterialien und Beschichtungsstoffe auf 10¹⁰ Ohm oder darunter abbauen können.

Daneben ist noch zu berücksichtigen, dass Antistatika die physikalischen und technischen Eigenschaften der polymeren Verkleidungsmaterialien und Beschichtungsstoffen, wie beispielsweise Oberflächenverlauf, Substratbenetzbarkeit, Substrathaftung, Siegelfähigkeit und thermische Stabilität, beeinflussen können. Zur Minimierung dieser Effekte sollten sie daher bereits in geringen Konzentrationen wirksam werden können. Typische Einsatzmengen von heute genutzten Antistatika liegen bei 0,01 bis 3 Gew.-%.

Metallsalze sind bekannte und wirksame Antistatika. Sie haben jedoch den Nachteil, dass sie zur homogenen Verteilung in Verkleidungsmaterialien und Beschichtungsstoffen vor der Anwendung gelöst werden müssen. Übliche Lösemittel sind Alkohole, Ether, Ester, Polyether, cyclische Ether, cyclische Ester, Amide, cyclische Amide, aromatische Verbindungen oder ganz allgemein organische Lösemittel. Die Löslichkeit ist jedoch zum Teil sehr gering, so dass für ausreichend wirksame Einsatzkonzentrationen große Mengen an Lösemittel verwendet werden müssen.

Sofern diese Antistatikaformulierungen in transparenten oder zumindest ungefärbten Verkleidungsmaterialien und Beschichtungsstoffen eingesetzt werden, haben sie den Nachteil, dass sie die optischen Eigenschaften des Endproduktes nachteilig beeinflussen können. In reaktiven Mehrkomponentensystemen, wie beispielsweise bei der Herstellung von reaktiven Polyurethanbeschichtungen, können gegebenenfalls vorhandene reaktive Gruppen des Lösemittels bzw. anderer Bestandteile der Antistatikaformulierungen unerwünscht an der Reaktion teilnehmen und so insbesondere die physikalischen Eigenschaften des Endproduktes verändern. In der Praxis werden daher die Metallsalze vorzugsweise in einem der Formulierungsbestandteile gelöst, bei Polyurethanen ist dies in der Regel die Alkoholkomponente, d.h. in Di- oder Polyolen, die dann mit Isocyanatenkomponenten zur Polymermatrix umgesetzt werden. Aufgrund der Vielzahl der einsetzbaren Polyole müsste dann eine entsprechende Vielzahl von Lösungen bereitgestellt werden. Daher werden diese Anitstatika/Metallsalze häufig in Lösemitteln gelöst, die Bestandteil sämtlicher Formulierungen sind, wie z.B. Ethylenglykol, Propylenglykol oder aber andere reaktive organische Lösemittel. Nachteilig ist hierbei, dass üblicherweise der Anteil dieser Formulierungsbestandteile, die dann nicht nur als Reaktivkomponente in der Polyurethanformulierung, sondern entweder zusätzlich oder auch ausschließlich als Lösemittel in der Antistatikformulierung verwendet werden, in der Polyurethanformulierung insgesamt nicht höher sein darf, als es ohne den Zusatz der Antistatikformulierung der Fall wäre, um die physikalischen Eigenschaften des Endproduktes möglichst nicht zu verändern.

Es wurde bereits versucht, Lösemittel für Metallsalze bereitzustellen, welche universell einsetzbar sind und ein hohes Lösungsvermögen für eine Vielzahl von Metallsalzen besitzen. Außerdem sollten sie gegenüber den Reaktionskomponenten weitgehend inert sein oder aber auch Bestandteil der Formulierung sein bzw. keinen negativen Einfluss auf die physikalischen Eigenschaften des Endproduktes haben. Das neue Lösemittel sollte zusätzlich verbesserte Lösemittelcharakteristik für Metallsalze aufweisen, wobei die resultierende Lösung aus Lösemittel und Metallsalz bessere Antistatikeigenschaften in Beschichtungsstoffen aufweisen soll.

Zu diesem Zweck werden bestimmte ionische Flüssigkeiten verwendet, die bessere Lösemittel für viele Metallsalze darstellen als die oben angeführten Di- und Polyole und gängige organische Lösemittel. Zur Herstellung wirksamer Anstistatikaformulierungen sollen deutlich geringere Mengen an Lösemittel erforderlich sein, um einen effektiven Gehalt an Metallsalz zur Verbesserung der Leitfähigkeit in Beschichtungsstoffen einzubringen im Vergleich zu WO 2008/006422. In diesem Dokument wird zwar die Verwendung ionischer Flüssigkeiten als Lösemittel für Metallsalze vorbeschrieben, wobei derartige Mischungen zusätzlich organische Lösemittel oder Dispergiermittel zugesetzt werden können, um einen möglichst hohen Leitsalzgehalt einzustellen. Diese werden in ausschließlich niedrigviskosen Systemen wie Druckfarben und/oder Drucklacken zum Einsatz gebracht. Antistatika-Systeme die auch in Dickbeschichtungen eingesetzt werden könnten, deren Polymermatrix einen hohen Anteil an partikulärem Festkörperabrieb (z.B. Marmorabrieb) aufweisen und auch in anderen Anwendungsbereichen mit abweichenden Anforderungen Verwendung finden, sind dieser Schrift nicht zu entnehmen.

Ableitfähige Böden müssen in der Lage sein, statische Aufladungen gezielt abzuleiten; weshalb in der Regel spezielle Systemaufbauten verwendet werden, deren Hauptbestandteile neben einer Grundierung ein hochleitfähiger Leitlack und eine durchleitfähige Deckbeschichtung sind. Die erforderliche Durchleitfähigkeit wird im Wesentlichen durch die Verwendung von Kohlenstofffasern realisiert. Schließlich muss der Leitlack noch mit der Erdung verbunden sein.

Die so genannten ESD-Böden sind dafür konzipiert, statische Aufladungen möglichst zu vermeiden und definiert abzuleiten. Die Überprüfbarkeit dieser Funktionen erfolgt neben den herkömmlichen Elektrodenmessungen zusätzlich durch die Messung der Personenaufladung (Body Voltage Generation), der Personenableitfähigkeit mittels einer Systemmessung Mensch/Schuh/Boden/Erde sowie über den zeitlich limitierten Entladevorgang der Person (decay time). Derartige ESD-Böden sind wie die ableitfähigen Systeme aufgebaut, zusätzlich aber mit mindestens einer dünnschichtigen Oberflächen-leitfähigen Versiegelung versehen. Möglich ist auch die zusätzliche Verwendung Oberflächen-leitfähiger Deckbeschichtungen, wobei die Oberflächenleitfähigkeit in diesem Fall durch die Verwendung leitfähiger Füllstoffe und Pigmente eingestellt wird. Derartige Systeme sind allerdings sehr teuer. Außerdem ist die Schichtdickentoleranz dieser Beschichtungen in der Regel sehr beschränkt und die darin auch verwendeten quartären Ammoniumverbindungen nicht ausreichend wirksam.

Sowohl für die ableitfähigen Böden als auch für die ESD-Böden werden als Polymermatrix unterschiedliche Bindemittelsysteme eingesetzt. Am häufigsten sind Amingehärtete Epoxidharze, aromatische und aliphatische Polyurethansysteme, radikalisch vernetzende Methacrylate (PMMA-Böden) sowie Vinylester. Um die gewünschten ESD-Eigenschaften zu erzielen, ist ein hoher Applikationsaufwand zu betreiben, wobei im Allgemeinen teure Deckschichten aufgebracht werden müssen.

Auch in der DE 10 2006 015775 werden antistatische Ausrüstungen in Form von Bodendickschichbeschichtungen beschrieben und damit als eine, eine flexible Bodenbeschichtung bildende, Dickbeschichtung nicht für besonders feste, anspruchsvolle Böden geeignet sind.

Aus den geschilderten Nachteilen des Standes der Technik hat sich für die vorliegende Erfindung die Aufgabe gestellt, einen Kunststein für Flächengebilde (z.B. aus künstlichem Marmor) mit antistatischen Eigenschaften bereitzustellen. Dies sollte ohne die Verwendung von zusätzlichen Versiegelungen gelingen; ohne die als nachteilig bekannte Schichtdickensensibilität und natürlich unter wirtschaftlich vorteilhaften Bedingungen, wobei insbesondere günstige Rohstoffe zur Anwendung gelangen sollten.

Auch ist es wesentlich, dass sich wegen der Verwendung zur Boden-, Wand- oder Tischplattengestaltung Anforderungen ästhetischer Natur ergeben, damit die Ableitung elektrostatischer Aufladungen möglichst durch eine Substanz erfolgt, die keine Beeinträchtigung bezüglich der Farbwahl des Endprodukts mit sich bringt.

Gelöst wurde diese Aufgabe durch einen Kunststein für Flächengebilde, der als antistatische Komponente ionische Flüssigkeiten und/oder Lösungen von Metallsalzen in ionischen Flüssigkeiten enthält.

Überraschend hat sich herausgestellt, dass mit diesem System die Aufgabenstellung voll erfüllt werden konnte, wobei insbesondere in Abhängigkeit von der jeweils gewählten Schichtdicke streuende Ableitfähigkeitswerte vollkommen vermieden werden können. Außerdem treten die sonst mit zunehmender Schichtdicke auftretenden zunehmenden Anteile von Leitlöchern ("Dead Spots") nicht auf. Somit kann mit dem erfindungsgemässen Kunststein die sonst nachteilige Schichtdickensensibilität vermieden werden. Außerdem war nicht zu erwarten, dass der vorgeschlagene Kunststein für Flächengebilde gleichzeitig sowohl die Anforderungen an die Ableitfähigkeiten als auch an die ESD-Systeme in einem einzigen Flächengebilde erfüllen können. Auf diese Weise ist es möglich, auf eine relativ preiswerte Art Kunststeine für Flächengebilde herzustellen, die sich kaum mehr elektrostatisch aufladen, wobei es auch möglich ist, in Abhängigkeit vom jeweiligen Anwendungsbereich die erfindungswesentliche antistatische Komponente mit weiteren leitfähigen Komponenten zu kombinieren, um die Performance des Materials gezielt einzustellen.

Der Oberflächenwiderstand der erfindungsgemäß ausgerüsteten Flächengebilde sinkt auf unter 10¹⁰ Ohm.
Der erfindungsgemäß antistatisch ausgerüstete Kunststein für Flächengebilde basiert auf der Verwendung von ionischen Flüssigkeiten als Antistatikmittel und/oder als Lösemittel (Compatibilizer) für Metallsalze (Leitsalze), insbesondere Alkalimetallsalze, wobei diesen Mischungen weitere organische Lösemittel oder Dispergiermittel zugesetzt werden können, um einen möglichst hohen Leitsalzgehalt einzustellen.

Die Antistatikformulierung bestehend aus mindestens einer ionischen Flüssigkeit und gegebenenfalls mindestens einem Metallsalz wird in der Regel vor der Aushärtung der Polymermatrix zusammen aber nicht notwendigerweise zeitgleich mit den anderen Bestandteilen zugegeben. Bei thermoplastischen Systemen kann die Antistatikformulierung und der Festkörperabrieb auch nach einem Wiederaufschmelzen eingearbeitet werden.
Damit ist ein Gegenstand der Erfindung ein Verfahren bei dem die Antistatikformulierung bestehend aus mindestens einer ionischen Flüssigkeit und gegebenenfalls mindestens einem Metallsalz vor der Aushärtung der Polymermatrix zusammen mit den anderen Bestandteilen verknetet wird oder bei thermoplastischen Polymeren durch Aufschmelzen eingearbeitet wird.

Die Einarbeitung der Antistatikformulierung erfolgt nach dem Fachmann geläufigen Verfahren analog der Einarbeitung anderer Additive und Zusatzstoffe zur Polymerkomposit-Zusammensetzungen.

Die erfindungsgemäßen, antistatisch ausgerüsteten Kunststeine für Flächengebilde enthalten bis zu maximal 40 Gew.-%, bevorzugt bis zu 25 Gew.-% einer Polymermatrix enthaltend ein Polyurethan, Epoxidharz, Polyesterharz, Acrylat, Methacrylat und/oder Vinylester. Zusätzlich können die Polymere auch Beimischungen von pflanzlichen Bestandteilen, insbesondere Polysaccharide z.B. Maisstärke, Sojabohnenstärke, und Fette enthalten.

Im Unterschied zu Bodendickbeschichtungen sieht die vorliegende Erfindung vor, dass die Inhaltsstoffmatrix des Kunststeins mindestens zu 60 Gew.-%, bevorzugt zu über 70 Gew.-% aus Festkörperabrieb besteht. Der verbleibende Rest wird durch die Polymermatrix, die Antistatikformulierung und weitere Additive und Zusatzstoffe, wie beispielsweise Pigmente, Farbstoffe, Entlüfter, etc. bestimmt.

Der beanspruchte Kunststein ist nicht auf spezielle Formulierungen beschränkt, die die antistatische Komponente in definierten Verbindungen enthält. Allerdings empfiehlt es sich, die antistatische Komponente in Mengen dem Kunststein zuzumischen, die zwischen 0,01 und 30 Gew.-% und vorzugsweise zwischen 0,1 und 20 Gew.-%, bezogen auf die Gesamtmasse der Formulierung des Kunststeins, liegen. Die erfindungsgemäß verwendete antistatische Komponente besteht aus der ionischen Flüssigkeit allein oder aber aus einer Mischung zwischen der ionischen Flüssigkeit und einem Metallsalz. Bei der Mischung aus ionischer Flüssigkeit und Metallsalz werden bezogen auf die Gesamtmasse der Formulierung für das Flächengebilde 0,01 bis 30 Gewichtsteile ionische Flüssigkeit und/oder 0,1 bis 30 Gewichtsteile Metallsalz verwendet, wobei das Metallsalz immer in Kombination mit zumindest einer ionischen Flüssigkeit verwendet wird. Es können sowohl Mischungen von unterschiedlichen Metallsalzen als auch Mischungen von verschiedenen ionischen Flüssigkeiten eingesetzt werden.

Bevorzugt beträgt der Anteil der Metallsalze an der Gesamtmischung der Antistatikformulierung zwischen 0,1 und 50 Gew.-%, besonders bevorzugt zwischen 0,5 und 40 Gew.-% und ganz besonders bevorzugt zwischen 1 und 10 Gew.-%.

Als Festkörperabrieb können erfindungsgemäß feste, natürlich auftretende oder künstlich erzeugte, gegebenenfalls in der Regel mikroskopisch heterogene Zusammensetzungen aus Mineralen, Gesteinsabrieb, Gesteinsbruchstücken, Gläsern oder Rückständen von Organismen, beispielsweise Kieselalgen, aber auch künstlich hergestellte Gesteine oder auch feste Kunststoffe verwendet werden. Der Festkörperabrieb kann auch in beliebigen Mischungen der verschiedenen Komponenten eingesetzt werden.

Die erfindungsgemäße Antistatikformulierung wirkt gleichartig einem inneren Antistatikum und kann aus der Matrix aus Polymer und Feststoffabrieb an die Oberfläche nachmigrieren damit die antistatische Wirkung aufrechterhalten bleibt.
Der hier verwendete Festkörperbegriff ist weit gefasst und bezieht auch natürlich auftretende Metall-Legierungen, vulkanisches Glas, lockeren Sand oder Kohle ein.

Gesteine, und dementsprechend auch ihr Gesteinsabrieb bestehen in erster Linie aus Mineralen wie beispielsweise Marmor, Quarz oder Granit. Vor allem sind dies Silikate, wie Feldspäte, Quarz, Glimmer, Amphibole oder Olivin, aber auch Karbonate, wie Calcit oder Dolomit sind wichtige Bestandteile von Gesteinen. Neben diesen Hauptgemengeteilen (die mineralischen Komponenten, die mehr als 10 Gew.-% der Gesamtmasse ausmachen) enthalten die meisten Gesteine noch so genannte Nebengemengeteile (Komponenten die zwischen 10 und 1 Gew.-% ausmachen) oder Akzessorien (Komponenten, die nur zu <1 Gew.-% enthalten sind). Häufig sind Akzessorien für die Gesteine namengebend.

Natursteine lassen sich entsprechend ihrer Entstehung (Genese) in drei Gesteinsklassen unterteilen:
Magmatische Gesteine (Magmatite), Metamorphe Gesteine (Metamorphite), Sedimentgesteine (Sedimentite).

Beispiele für Gesteine sind Achondrit, Adakit, Aleurit, Alkaligranit, Amphibolit, Anatexit, Andesit, Anhydritstein, Anthrazit, Aplit, Arenit, Arizonit, Arkose, Augengneis, Basalt, Basanit, Bauxit, Bentonit, Bimsstein, Biolithe, Blätterkohle, Blauschiefer, Bohnerz, Braunkohle, Brekzie (Breccie), Buntsandstein, Bändererz, Charnockit, Chert, Chilesalpeter, Chloritschiefer, Chondrit, Cipollino, Dachschiefer, Dacit, Diabas, Diamiktit, Diatomit, Diorit, Dolerit, Dolomit, Dunit, Eisenmeteorit, Eisenoolith, Eklogit, Enderbit, Erbsenstein, Essexit, Evaporit, Fanglomerat, Faxekalk, Faserkohle, Felsit, Felsquarzit, Fettkohle, Feuerstein, Fladenlava, Flammkohle, Fleckschiefer, Flint, Flysch, Foidit, Foyait, Fruchtschiefer, Fulgurit, Gabbro, Garbenschiefer, Gasflammkohle, Gaskohle, Gips, Glanzkohle (Steink.), Glanzkohle (Braunk.), Glaukophanschiefer, Glimmerschiefer, Gneis, Granit, Granitporphyr, Granodiorit, Granophyr, Granulit, Graptholithenschiefer, Grauwacke, Griffelschiefer, Grünschiefer, Halitit, Hartbraunkohle, Harzburgit, Hawaiit, Hornblendit, Hornfels, Hornstein, Humolithe, Ignimbrit, Itakolumit, Kalisalze, Kalksandstein, Kalkstein, Kalksilikatfels, Kalksinter, Kalktuff, Kalziolith, Kännelkohle, Kaolin, Karbonatit, Karstmarmore, Kataklasit, Kennelkohle, Khondalit, Kieselerde, Kieselgur, Kieselschiefer, Kieselsinter, Kimberlit, Kissenlava, Klingstein, Knochenbrekzie, Knotenschiefer, Kohle, Kohleeisenstein, Kohlenkalk, Kokardenerz, Konglomerat, Kontaktschiefer, Korallenerz, Kreide, Kuckersit, Lamproit, Lamprophyr, Lapilli, Lapislazuli, Larvikit, Lava, Latit, Lehm. Letten, Leucitit, Lherzolith, Lignit, Limburgit, Liparit, Liptobiolith, Lockergestein, Löss, Lutit, Lydit, Magerkohle, Mafitit, Mandelstein, Manganknollen, Marmor, Massenkalk, Mattkohle, Meerschaum, Melaphyr auch Mandelstein, Melilithit, Mergel, Mergelschiefer, Mergelstein, Meteorit, Migmatit, Mikrodiorit, Mikrogabbro, Mikrogranit, Minette (Ganggestein), Minette (Erz), Moldavit, Monzonit, MORB, Mugearit, Mylonit, Nephelinbasalt, Nephelinit, Nephelinsyenit, Obsidian, OIB, Ölschiefer, Onyxmarmor, Oolith, Ophicalcit, Ophiolith, Ophit, Opuka, Pallasit, Pechstein, Pantellerit, Pegmatit, Perlit, Perowskit, Phonolith, Phyllit, Pikrit, Pläner, Porphyr, Prasinit, Pseudotachylit, Pyroxenit, Quarzit, Quarzolith, Quarzporphyr, Radiolarit, Rapakiwi, Raseneisenstein, Rhyolith, Ringelerz, Rogenstein, Sandstein, Schalstein, Schiefer, Schlacke, Schwarzpelit, Serpentinit, Siltstein, Skarn, Sonnenbrennerbasalt, Spateisenstein, Spiculit, Spilit, Steinkohle, Steinsalz, Steinmeteorit, Suevit, Syenit, Talk-Disthen-Schiefer, Tektit, Tephrit, Tholeiit, Tonalit, Tonschiefer, Tonstein, Trachyt, Travertin, Trondhjemit, Tropfstein, Tuffstein, Unakit, Weißschiefer, Wüstit.

Neben diesen hauptsächlich natürlichen Gesteinen können auch künstlich hergestellte Gesteine oder auch beispielsweise Glas, Porzellan und Keramik in zerkleinerter Form erfindungsgemäß zur Herstellung der Flächengebilde mitverwendet werden.

Auch eine Vielzahl von festen, gegebenenfalls schlagharten oder schlagzähen, Kunststoffen können in zerkleinerter Form allein oder in Mischungen mit Gesteinen und/oder künstlichen Gesteinen zu den erfindungsgemäßen Flächengebilden verarbeitet werden.

Die natürlichen Gesteinsarten, künstlichen Gesteine, Gläser, Porzellan und/oder Keramiken sowie festen Kunststoffe können allein und/oder in beliebigen Mischungen miteinander und untereinander verwendet werden.

Weiterhin können Zusatz- und Hilfsstoffe wie Füllstoffe und/oder Pigmente enthalten sein, die vorzugsweise leitfähige Eigenschaften aufweisen können. Hier kommen insbesondere Karbonfasern wie z. B. auf Basis von Polyacrylnitril (PAN), Pech und Reyon®, Graphit, Russ, Metalloxide und Metalllegierungsoxide in Frage. Ebenfalls geeignet sind Füllstoffe und Pigmente, die mit Komponenten beschichtet sind, die ihnen leitfähige Eigenschaften verleihen. Auch in diesem Fall sind gegebenenfalls jeweils leitfähig beschichtete Graphite, beschichtete Russe und beschichtete Metalloxide beziehungsweise beschichtete Metalllegierungsoxide besonders geeignet.

Der für den Kunststein und gegebenenfalls auch für den Kunststeinkleber, Putz, Fugenfüllmörtel oder Fliesenkleber zu verwendende Festkörperabrieb zeichnet sich durch eine Korngröße zwischen 0,001 mm bis 20 mm, bevorzugt 0,01 mm bis 5 mm aus.

Der fertig ausgehärtete Kunststein mit dem Festkörperabrieb in der Polymermatrix zeichnet sich dadurch aus, dass er mit dem Fachmann bekannten Methoden, gegebenenfalls geschliffen und/oder poliert werden kann, um eine ästhetisch wünschenswerte Oberflächenstruktur erreichen zu können, ohne dass die antistatischen Eigenschaften beeinträchtigt werden.

Der erfindungsgemäß antistatisch ausgestattende Kunststein zeichnet sich dadurch aus, dass sein spezifischer Oberflächenwiderstand bei Werten von 10¹⁰ Ohm und niedriger und somit deutlich unter den Oberflächenwiderständen von nicht antistatisch ausgerüsteten Bodendickbeschichtungen aus Kunststoff liegt.

Ein weiterer Gegenstand der Erfindung sind auch die zur Verklebung mit dem Untergrund genutzten Klebstoffe und Putze, welche gegebenenfalls in gleichartiger Weise mit den erfindungsgemäßen Antistatikfomulierungen ausgerüstet sind. Diese Komponenten können auch zusätzlich den Festkörperabrieb enthalten.

Als ionische Flüssigkeiten ("ionic liquids") bezeichnet man allgemein bei niedrigen Temperaturen (< 100° C) schmelzende Salze, die eine neuartige Klasse von Flüssigkeiten mit nichtmolekularem, ionischem Charakter darstellen. Im Gegensatz zu klassischen Salzschmelzen, die hochschmelzende, hochviskose und sehr korrosive Medien darstellen, sind ionische Flüssigkeiten bereits bei niedrigen Temperaturen flüssig und relativ niedrigviskos (K.R. Seddon J. Chem. Technol. Biotechnol. 1997, 68, 351-356).

Ionische Flüssigkeiten im Sinne der vorliegenden Erfindungen sind Salze der nachfolgend aufgeführten allgemeinen Formeln (I), (II), oder (III):

[A]ₙ⁺ [Y]ⁿ⁻ (I)

in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht; oder gemischte Salze der allgemeinen Formeln (II)

[A¹]⁺[A²]⁺ [Y]²⁻ (IIa);

[A¹]⁺[A²]⁺[A³]⁺ [Y]³⁻ (IIb);

oder

[A¹]⁺[A²]⁺[A³]⁺[A⁴]⁺ [Y]⁴⁻ (IIc),

wobei [A¹]⁺, [A²]⁺ [A³]⁺ und [A⁴]⁺ unabhängig voneinander aus den für [A]⁺ genannten Gruppen ausgewählt sind und [Y]ⁿ⁻ die für Formel (I) genannte Bedeutung besitzt; oder gemischte Salze der allgemeinen Formeln (III)

[A¹]⁺[A²]⁺[A³]⁺[M¹]⁺ [Y]⁴⁻ (IIIa);

[A¹]⁺[A²]⁺[M¹]⁺[M²]⁺ [Y]⁴⁻ (IIIb);

[A¹]⁺[M¹]⁺[M²]⁺[M³]⁺ [Y]⁴⁻ (IIIc);

[A¹]⁺[A²]⁺[M¹]⁺ [Y]³⁻ (IIId);

[A¹]⁺[M¹]⁺[M²]⁺ [Y]³⁻ (IIIe);

[A¹]⁺[M¹]⁺ [Y]²⁻ (IIIf);

[A¹]⁺[A²]⁺[M⁴]²⁺ [Y]⁴⁻ (IIIg);

[A¹]⁺[M¹]⁺[M⁴]²⁺ [Y]⁴⁻ (IIIh);

[A⁺]+[M⁵]³⁺ [Y]⁴⁻ (IIIi);

oder

[A¹]⁺[M⁴]²⁺ [Y]³⁻ (IIIj)

wobei [A¹]⁺, [A²]⁺ und [A³]⁺ unabhängig voneinander aus den für [A]⁺ genannten Gruppen ausgewählt sind, [Y]ⁿ⁻ die für Formel (I) genannte Bedeutung besitzt und [M¹]⁺, [M²]⁺, [M³]⁺ einwertige Metallkationen, [M⁴]²⁺ zweiwertige Metallkationen und [M⁵]³⁺ dreiwertige Metallkationen bedeuten; oder Gemische aus allen Formeln (I) bis (III).

Ionische Flüssigkeiten bestehen beispielsweise aus Anionen wie zum Beispiel Halogeniden, Carboxylaten, Phosphaten, Thiocyanaten, Isothiocyanaten, Dicyanamiden, Sulfaten, Alkylsulfaten, Sulfonaten, Alkylsulfonaten, Tetrafluoroborat, Hexafluoro-phosphat oder auch Bis(trifluormethylsulfonyl)imid kombiniert mit zum Beispiel substituierten Ammonium-, Phosphonium-, Pyridinium- oder Imidazolium-Kationen, wobei die vorgenannten Anionen und Kationen eine kleine Auswahl aus der großen Zahl möglicher Anionen und Kationen darstellen und damit kein Anspruch auf Vollständigkeit erhoben oder gar eine Einschränkung vorgegeben werden soll.

Die erfindungsgemäß verwendeten ionischen Flüssigkeiten setzen sich bevorzugt aus mindestens einer quartären Stickstoff- und/oder Phosphorverbindung und/oder Schwefelverbindung und mindestens einem Anion zusammen und ihr Schmelzpunkt liegt unterhalb ca. + 250 °C, vorzugsweise unterhalb ca. + 150 °C, insbesondere unterhalb ca. + 100 °C. Besonders bevorzugt sind die erfindungsgemäß verwendeten ionischen Flüssigkeiten oder ihre Mischungen bei Raumtemperatur flüssig.

Die im Sinne der Erfindung bevorzugt verwendeten ionischen Flüssigkeiten können beispielsweise aus mindestens einem Kation der allgemeinen Formeln bestehen:

R¹R²R³R⁴N⁺ (IV)

R¹R²N⁺=CR³R⁴ (V)

R¹R²R³R⁴P⁺ (VI)

R¹R²P⁺=CR³R⁴ (VII)

R¹R²R³S⁺ (VIII)

in denen
- R¹,R²,R³,R⁴: gleich oder unterschiedlich sind und Wasser- stoff, einen linearen oder verzweigten gegebenenfalls Doppelbindungen enthaltenden aliphatischen Kohlen- wasserstoffrest mit 1 bis 30 Kohlenstoffatomen, einen gegebenenfalls Doppelbindungen enthaltenden cyclo- aliphatischen Kohlenwasserstoffrest mit 5 bis 40 Koh- lenstoffatomen, einen aromatischen Kohlenwasserstoff- rest mit 6 bis 40 Kohlenstoffatomen, einen Alkylaryl- rest mit 7 bis 40 Kohlenstoffatomen, einen durch ein oder mehrere Heteroatome (Sauerstoff, NH, NR' mit R' gleich einem gegebenenfalls Doppelbindungen enthal- tenden C₁-C₃₀-Alkylrest, insbesondere -CH₃) unterbroche- n e n linearen oder verzweigten gegebenenfalls Doppelbindungen enthaltenden aliphatischen Kohlen- wasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlen- wasserstoffrest mit 2 bis 30 Kohlenstoffatomen, einen endständig OH, OR', NH₂, N(H)R', N(R')₂, bei denen R' gleich einem gegebenenfalls Doppelbindungen enthaltenden C₁-C₃₀-Alkylrest ist, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statis- tisch aufgebauten Polyether gemäß -(R⁵-O)ₙ-R⁶ bedeuten,
wobei
- R⁵: ein 2 bis 4 Kohlenstoffatome enthaltender linearer oder verzweigter Kohlenwasserstoffrest,
- n: 1 bis 100, vorzugsweise 2 bis 60, ist und
- R⁶: Wasserstoff, einen linearen oder verzweigten gege- benenfalls Doppelbindungen enthaltenden aliphati- schen Kohlenwasserstoffrest mit 1 bis 30 Kohlenstoffatom e n , e i n en gegebenenfalls Doppelbindungen enthaltenden cycloaliphatischen Kohlenwasserstoffrest mit 5 bis 40 Koh- lenstoffatomen, einen aromatischen Kohlenwasser- stoffrest mit 6 bis 40 Kohlenstoffatomen, einen Alkylarylrest mit 7 bis 40 Kohlenstoffatomen bedeu- tet oder ein Rest -C(O)-R⁷ mit
- R⁷: gleich einem linearen oder verzweigten gegebenen- falls Doppelbindungen enthaltenden aliphatischen Kohlenwasserstoffrest mit 1 bis 30 Kohlenstoff- atomen, einem gegebenenfalls Doppelbindungen ent- haltenden cycloaliphatischen Kohlenwasserstoffrest mit 5 bis 40 Kohlenstoffatomen, einem aromatischen Kohlenwasserstoffrest mit 6 bis 40 Kohlenstoffato- men, einem Alkylarylrest mit 7 bis 40 Kohlenstoff- atomen ist.

Bevorzugt werden quarternäre Ammoniumsalze alkoxylierter Fettsäuren - auch als Alkanolaminesterquats bezeichnet - gekennzeichnet durch die generische Formel des Typs R¹R²R³R⁴N⁺ A⁻ (IV) in denen R¹ ein Alkylrest mit 1 bis 20 Kohlenstoffatomen, R² ein Alkylrest mit 1 bis 4 Kohlenstoffatomen, R³ ein Rest (CH₂CHRO)ₙ-H mit n von 1 bis 200 und R gleich H oder CH₃, R⁴ ein Alkylrest mit 1 bis 4 Kohlenstoffatomen oder ein Rest (CH₂CHRO)ₙ-H mit n von 1 bis 200 und R gleich H oder CH₃ und A⁻ ein einwertiges Anion ist.

Bei diesen Verbindungen sind Substanzen der Formel

(IX) R⁶₄₋ₘN⁺[((CH₂)ₙ-Q-R⁷]ₘ X⁻

bevorzugt, wobei: jeder Rest R⁶ unabhängig voneinander ein Alkylgruppe oder Hydroxyalkylgruppe mit 1 bis 6 Kohlenstoffatomen, oder eine Benzylgruppe, und vorzugsweise eine Methylgruppe ist; R⁷ ist unabhängig voneinander Wasserstoff, eine lineare oder verzweigte Alkylgruppe mit 11 bis 22 Kohlenstoffatomen, eine lineare oder verzweigte Alkenylgruppe mit 11 bis 22 Kohlenstoffatomen, mit der Bedingung dass mindestens ein Rest R⁷ nicht Wasserstoff ist;
Q ist unabhängig ausgewählt aus den Gruppen der Formeln - O-C O)-, -C(O)O, -NR⁸-C(O)-, -C(O)-NR⁸-, -0-C(O)-O, -CHR⁹-O-C(O)- oder -CH(OCOR⁷)-CH₂-O-C(O)-, wobei R⁸ Wasserstoff, Methyl, Ethyl, Propyl- oder Butylrest ist und R⁹ ist Wasserstoff oder Methyl ist und vorzugsweise Q ist -O-C(O)- oder -NH-C(O)-; m ist gleich 1 bis 4 und vorzugsweise 2 oder 3; n ist gleich 1 bis 4 und vorzugsweise 2; und X ein mit Weichmachern kompatibles Anion, z.B. Chlorid, Bromid, Methylsulfat, Ethylsulfat, Sulfat oder Nitrat, vorzugsweise Chlorid oder Methyl- Sulfat. Die quaternäre AmmoniumVerbindungen kann Gemische der Verbindungen mit unterschiedlichen Gruppen R⁷ enthalten die nicht gleich Wasserstoff sind, deren Wert von 1 bis zu m reicht. Vorzugsweise umfassen solche Gemische auf Durchschnitt von 1,2 bis 2,5 Gruppen R⁷, die nicht Wasserstoff sind. Vorzugsweise liegt der Anteil der Nicht-Wasserstoffgruppen R⁷ bei 1.4 bis 2.0 und bevorzugt bei 1.6 bis 1.9.
Die bevorzugten quarternären Ammoniumverbindungen sind die Verbindungen des Typs:

(X) R⁶N⁺[CH₂CHR⁹OH-] [CH₂CHR⁹OC(O)R⁷]₂ X⁻

(XI) R⁶N⁺[CH₂CHR⁹OC(O)R⁷]₂ X⁻

(XII) R⁶N⁺[CH₂CHR⁹OH-] [CH₂CH₂NHC(O)R⁷]₂ X⁻,

wobei R⁶, R⁷ und X haben die gleiche Bedeutung wie für Formel (IX) oben definiert, mit der Bedingung dass R⁷ nicht Wasserstoff ist.
Vorzugsweise ist das Fragment -C(O)R⁷ eine fetthaltige Acylgruppe. Verwendbare fetthaltige Acylgruppen werden von den natürlichen Quellen der Triglyzeride, vorzugsweise Talg, pflanzliche öle, teilweise hydrierter Talg und teilweise hydrierte pflanzliche öle abgeleitet. Verwendbare Quellen der Triglyzeride sind Sojabohnenöl, Talg, partiell hydrierter Talg, Palmöl, Palmekerne, Rapssamen, Schweinefett, Kokosnuss, Raps, Distelöl, Mais, Reis und Tallöl und Mischungen dieser Komponenten.
Dem Fachmann ist bekannt, dass die Zusammensetzung der Fettsäurehaltigen Verbindungen gewissen natürlichen Schwankungen unterworfen ist, abhängig von Erntegut zu Erntegut oder von der Vielzahl der pflanzlichen Ölquellen. Die R⁷-Gruppen sind gewöhnlich Gemische der linearen und verzweigten Kohlenstoffketten der gesättigten und ungesättigten aliphatischen Fettsäuren.
Der Anteil der ungesättigten Gruppen R⁷ in solchen Gemischen beträgt vorzugsweise mindestens 10%, besonders bevorzugt mindestens 25% und ganz besonders bevorzugt 40% bis 70%. Der Anteil der mehrfach ungesättigten Gruppen R⁷ in solchen Gemischen beträgt weniger als 10%, vorzugsweise weniger als 5% und besonders bevorzugt weniger als 3%. Wenn erforderlich kann Teilhydrierung durchgeführt werden, um die den gesättigten Charakter anzuheben und damit die Stabilität (z.B., Geruch, Farbe, etc.) des Endprodukts zu verbessern. Das Gehalt ungesättigter Anteile, ausgedrückt durch den Jodzahl, sollte in einem Bereich von 5 bis 150 und vorzugsweise in einem Bereich von bevorzugt 5 bis 50 liegen. Das Verhältnis von cis- und trans-Isomeren der Doppelbindungen in den ungesättigten Gruppen R⁷ ist vorzugsweise größer als 1: 1 und besonders bevorzugt im Bereich von 4 zu 1 bis 50 zu 1.
Bevorzugte Beispiele der Verbindungen von Formel (IX) sind:
N,N-Di(tallowyloxyethyl)-N,N-dimethylammonium-chlorid;
N,N-Di(canolyloxyethyl)-N,N-dimethylammonium-chlorid;
N,N-Di(tallowyloxyethyl)-N-methyl,N-(2-hydroxyethyl)ammonium-methylsulfat;
N,N-Di(canolyloxyethyl)-N-methyl,N-(2-hydroxyethyl) ammonium-methylsulfat;
N,N-Di(tallowylamidoethyl)-N-methyl,N-(2-hydroxyethyl) ammonium-methylsulfat;
N,N-Di(2-tallowyloxy-2-oxo-ethyl)-N,N-dimethylammonium-chlorid;
N,N-Di(2-canolyloxy-2-oxo-ethyl)-N,N-dimethylammonium-chlorid;
N,N-Di(2-tallowyloxyethylcarbonyloxyethyl)-N,N-dimethylammonium-chlorid;
N,N-Di(2-canolyloxyethylcarbonyloxyethyl)-N,N-dimethylammonium-chlorid;
N(2-tallowoyloxy-2-ethyl)-N-(2-tallowyloxy-2-oxo-ethyl)-N,N-dimethylammonium-chlorid;
N(2-canolyloxy-2-ethyl)-N(2-canolyloxy-2-oxo-ethyl)-N,N-dimethylammonium-chlorid;
N,N,N-Tri(tallowyloxyäthyl)-N-methylammonium-chlorid;
N,N,N-Tri(canolyloxyäthyl)-N-methylammonium-chlorid;
1,2-Ditallowyloxy-3-N,N,N-trimethylammoniumpropyl-chlorid; und
1,2-Dicanolyloxy-3-N,N,N-trimethylammoniumpropyl-chlorid.

Weiterhin bevorzugte quarternäre Ammoniumsalze sind Ditallowdimethylammonium-chlorid, Ditallowdimethylammoniummethylsulfat, Dimethylammonium-Chlorid der Di(hydriertestallow)distearyldimethylammonium-chlorid und Dibehenyldimethylammonium-chlorid.
Als Kationen kommen ferner Ionen in Betracht, die sich von gesättigten oder ungesättigten cyclischen Verbindungen sowie von aromatischen Verbindungen mit jeweils mindestens einem dreibindigen Stickstoffatom in einem 4- bis 10-, vorzugsweise 5- bis 6-gliedrigen heterocyclischen Ring ableiten, der gegebenenfalls substituiert sein kann. Solche Kationen lassen sich vereinfacht (d. h. ohne Angabe von genauer Lage und Zahl der Doppelbindungen im Molekül) durch die nachstehenden allgemeinen Formeln (XIII), (XIV) und (XV) beschreiben, wobei die heterocyclischen Ringe gegebenenfalls auch mehrere Hetereoatome enthalten können. 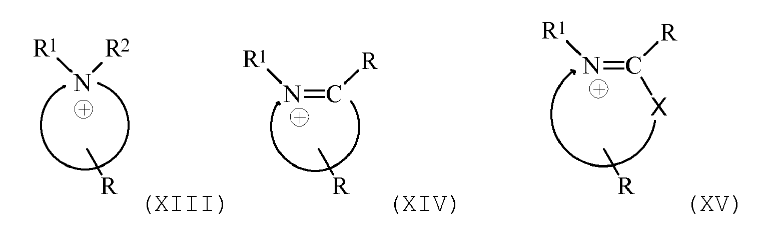
- R¹ und R²: besitzen dabei die vorgenannte Bedeutung,
- R: ist ein Wasserstoff, ein linearer oder verzweigter gegebenenfalls Doppelbindungen enthaltender aliphati- scher Kohlenwasserstoffrest mit 1 bis 30 Kohlenstoff- atomen, ein cycloaliphatischer gegebenenfalls Doppel- bindungen enthaltender Kohlenwasserstoffrest mit 5 bis 40 Kohlenstoffatomen, ein aromatischer Kohlen- wasserstoffrest mit 6 bis 40 Kohlenstoffatomen oder ein Alkylarylrest mit 7 bis 40 Kohlenstoffatomen.
- X: ist ein Sauerstoffatom, ein Schwefelatom oder ein sub- stituiertes Stickstoffatom (X = O, S, NR¹).

Beispiele für cyclische Stickstoffverbindungen der vorgenannten Art sind Pyrrolidin, Dihydropyrrol, Pyrrol, Imidazolin, Oxazolin, Oxazol, Thiazolin, Thiazol, Isoxazol, Isothiazol, Indol, Carbazol, Piperidin, Pyridin, die isomeren Picoline und Lutidine, Chinolin und iso-Chinolin. Die cyclischen Stickstoffverbindungen der allgemeinen Formeln (XIII), (XIV) und (XV) können unsubstituiert (R = H), einfach oder auch mehrfach durch den Rest R substituiert sein, wobei bei einer Mehrfachsubstitution durch R die einzelnen Reste R unterschiedlich sein können.

Als Kationen kommen weiterhin Ionen in Betracht, die sich von gesättigten acyclischen, gesättigten oder ungesättigten cyclischen Verbindungen sowie von aromatischen Verbindungen mit jeweils mehr als einem dreibindigen Stickstoffatom in einem 4- bis 10-, vorzugsweise 5- bis 6-gliedrigen heterocyclischen Ring ableiten. Diese Verbindungen können sowohl an den Kohlenstoffatomen als auch an den Stickstoffatomen substituiert sein. Sie können ferner durch, gegebenenfalls substituierte, Benzolringe und/oder Cyclohexanringe unter Ausbildung mehrkerniger Strukturen anneliert sein. Beispiele für solche Verbindungen sind Pyrazol, 3,5-Dimethylpyrazol, Imidazol, Benzimidazol, N-Methylimidazol, Dihydropyrazol, Pyrazolidin, Pyridazin, Pyrimidin, Pyrazin, 2,3-, 2,5- und 2,6-Dimethylpyrazin, Cimolin, Phthalazin, Chinazolin, Phenazin und Piperazin. Insbesondere vom Imidazol und seinen Alkyl- und Phenylderivaten abgeleitete Kationen haben sich als Bestandteil ionischer Flüssigkeiten bewährt.

Als Kationen kommen ferner Ionen in Betracht, welche zwei Stickstoffatome enthalten und durch die allgemeine Formel (XVI) wiedergegeben sind 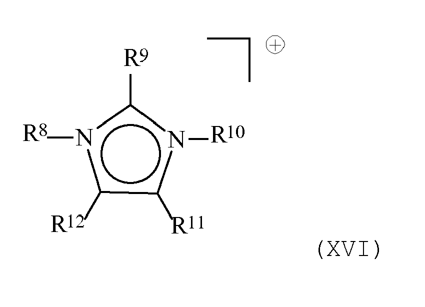 in denen
- R⁸, R⁹, R¹⁰, R¹¹, R¹²: gleich oder unterschiedlich sind und Wasser- stoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (Sauerstoff, NH, NR` mit R` gleich einem gegebenenfalls Doppelbin- dungen enthaltenden C₁-C₃₀-Alkylrest), unterbrochenen linearen oder verzweigten gegebenenfalls Doppelbin- dungen enthaltenden aliphatischen Kohlenwasserstoffrest mit 1 bis 30 Kohlenstoffatomen, einen durch ein oder mehrere Funktionalitäten, ausgewählt aus der Gruppe -O- C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, - NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthalten- den C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R⁵-O)ₙ-R⁶ bedeuten,
wobei
- R⁵ ein 2 bis 4: Kohlenstoffatome enthaltender Kohlenwasserstoffrest,
- n: 1 bis 100 ist und
- R⁶: Wasserstoff, einen linearen oder verzweigten gege- benenfalls Doppelbindungen enthaltenden aliphati- schen Kohlenwasserstoffrest mit 1 bis 30 Kohlenstoffatom e n einen cycloaliphatischen gegebenenfalls Doppelbindungen enthaltenden Kohlenwasserstoffrest mit 5 bis 40 Koh- lenstoffatomen, einen aromatischen Kohlenwasser- stoffrest mit 6 bis 40 Kohlenstoffatomen, einen Al- kylarylrest mit 7 bis 40 Kohlenstoffatomen bedeutet oder ein Rest -C(O)-R⁷ mit
- R⁷: gleich einem linearen oder verzweigten gegebenen- falls Doppelbindungen enthaltenden aliphatischen Kohlenwasserstoffrest mit 1 bis 30 Kohlenstoff- atomen, einem gegebenenfalls Doppelbindungen ent- haltenden cycloaliphatischen Kohlenwasserstoffrest mit 5 bis 40 Kohlenstoffatomen, einem aromatischen Kohlenwasserstoffrest mit 6 bis 40 Kohlenstoffato- men, einem Alkylarylrest mit 7 bis 40 Kohlenstoff- atomen ist.
Als ganz besonders bevorzugte Imidazoliumionen (XVI) seien genannt 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethyl-imidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methyl-imidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimi-dazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethyl-imidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1- (1-Octyl) -2, 3-di-methylimidazolium, 1, 4-Dimethylimidazolium, 1,3,4-Trimethylimidazolium, 1,4-Di-methyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octyl-imidazolium.

Als Kationen kommen zudem Ionen in Betracht, die insbesondere zusammengesetzt aus den vorgenannten Kationen aufgrund von Dimerisierung, Trimerisierung oder Polymerisierung Dikationen, Trikationen oder Polykationen bilden. Hierunter werden auch solche Dikationen, Trikationen und Polykationen zusammengefasst, die ein polymeres Rückgrat beispielsweise auf Basis von Siloxanen, Polyethern, Polyestern, Polyamiden, oder Polyacrylaten besitzen, insbesondere verzweigte und hyperverzweigte Polymere.

Es kommen ferner ionische Flüssigkeiten in Betracht, bei denen das Kation [A]⁺ ein Pyridiniumion (XVIIa) ist, bei dem 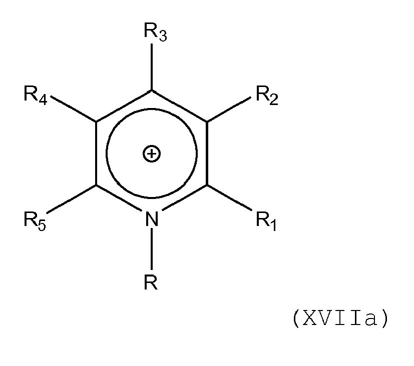
- einer der Reste R₁ bis R₅ Methyl, Ethyl oder Chlor ist und die verbleibenden Reste R₁ bis R₅ Wasserstoff sind;
- R₃ Dimethylamino ist und die verbleibenden Reste R₁, R₂, R₄ und R₅ Wasserstoff sind;
- alle Reste R₁ bis R₅ Wasserstoff sind;
- R₂ Carboxy oder Carboxamid ist und die verbleibenden Reste R₁, R₂, R₄ und R₅ Wasserstoff sind; oder
- R₁ und R₂ oder R₂ und R₃ 1,4-Buta-1,3-dienylen ist und die verbleibenden Reste R₁, R₂, R₄ und R₅ Wasserstoff sind;
   und insbesondere ein solches, bei dem
- R₁ bis R₅ Wasserstoff sind; oder
- einer der Reste R₁ bis R₅ Methyl oder Ethyl ist und die verbleibenden Reste R₁ bis R₅ Wasserstoff sind.

Als ganz besonders bevorzugte Pyridiniumionen (XVIIa) seien genannt 1-Methylpyridinium, 1-Ethylpyridinium, 1-(1-Butyl)pyridinium, 1-(1-Hexyl)pyridinium, 1-(1-Octyl)-pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methyl-pyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1, 2-Dimethyl-5-ethylpyridinium, 1,5-Diethyl-2-methyl-pyridinium, 1-(1-Butyl)-2-methyl-3-ethyl-pyridinium, 1-(1-Hexyl)-2-methyl-3-ethylpyridinium und 1-(1-Octyl)-2-methyl-3-ethylpyridinium, 1-(1-Dodecyl)-2-methyl-3-ethyl-pyridinium, 1-(1-Tetradecyl)-2-methyl-3-ethyl-pyridinium und 1-(1-Hexadecyl)-2-methyl-3-ethyl-pyridinium.

Darüber hinaus kommen ionische Flüssigkeiten in Betracht, bei denen das Kation [A]⁺ ein Pyridaziniumion (XVIIb) ist, bei dem 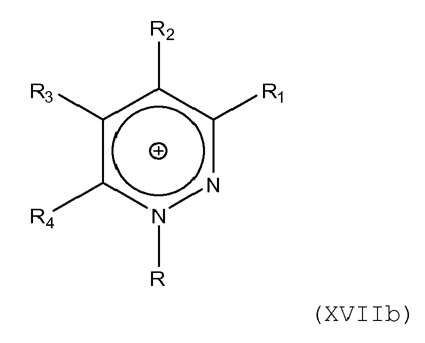
- R₁ bis R₄ Wasserstoff sind; oder
- einer der Reste R₁ bis R₄ Methyl oder Ethyl ist und die verbleibenden Reste R₁ bis R₄ Wasserstoff sind.

Ganz besonders bevorzugt sind zudem ionische Flüssigkeiten, bei denen das Kation [A]⁺ ein Pyrimidiniumionen (XVIIc) ist, bei dem 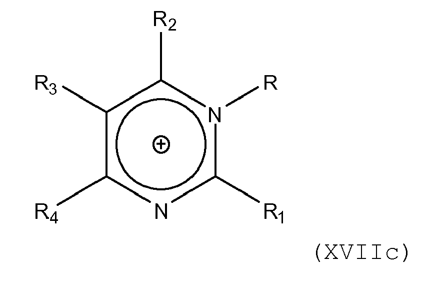
- R₁ Wasserstoff, Methyl oder Ethyl ist und R₂ bis R₄ unabhängig voneinander Wasserstoff oder Methyl sind; oder
- R₁ Wasserstoff, Methyl oder Ethyl ist, R₂ und R₄ Methyl sind und R₃ Wasserstoff ist.

In Betracht kommen außerdem ionische Flüssigkeiten, bei denen das Kation [A]⁺ ein Pyraziniumionen (XVIId) ist, bei dem 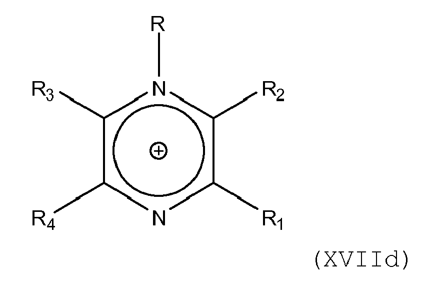
- R₁ Wasserstoff, Methyl oder Ethyl ist und R₂ bis R₄ unabhängig voneinander Wasserstoff oder Methyl sind;
- R₁ Wasserstoff, Methyl oder Ethyl ist, R₂ und R₄ Methyl sind und R₃ Wasserstoff ist;
- R₁ bis R₄ Methyl sind; oder
- R₁ bis R₄ Methyl oder Wasserstoff sind.

In Betracht kommen weiterhin ionische Flüssigkeiten, bei denen das Kation [A]⁺ ein Pyrazoliumion (XVIIf), (XVIIg) beziehungsweise (XVIIg') ist, bei dem 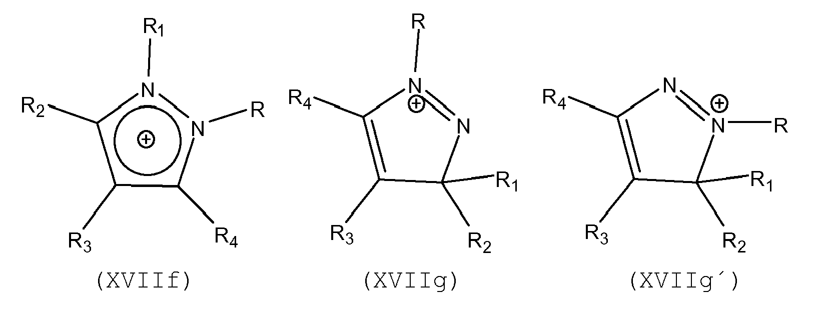
- R¹ Wasserstoff, Methyl oder Ethyl ist und R² bis R⁴ unabhängig voneinander Wasserstoff oder Methyl sind.

In Betracht kommen darüber hinaus ionische Flüssigkeiten, bei denen das Kation [A]⁺ ein Pyrazoliumion (XVIIh)ist, bei dem 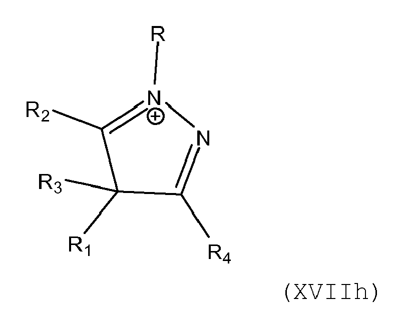
- R¹ bis R⁴ unabhängig voneinander Wasserstoff oder Methyl sind.

In Betracht kommen zudem ionische Flüssigkeiten, bei denen das Kation [A]⁺ ein 1-Pyrazoliniumion (XVIIi) ist, bei dem 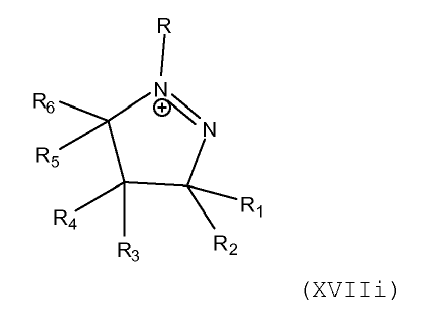
- unabhängig voneinander R₁ bis R₆ Wasserstoff oder Methyl sind.

In Betracht kommen weiterhin ionische Flüssigkeiten, bei denen das Kation [A]⁺ ein 2-Pyrazoliniumion (XVIIj) ist, bei dem 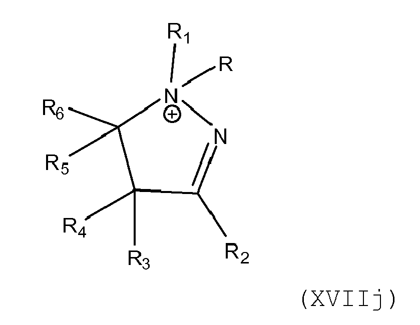
- R₁ Wasserstoff, Methyl, Ethyl oder Phenyl ist und R₂ bis R₆ unabhängig voneinander Wasserstoff oder Methyl sind.

In Betracht kommen auch ionische Flüssigkeiten, bei denen das Kation [A]⁺ ein 3-Pyrazoliniumion (XVIIk) beziehungsweise (XVIIk') ist, bei dem 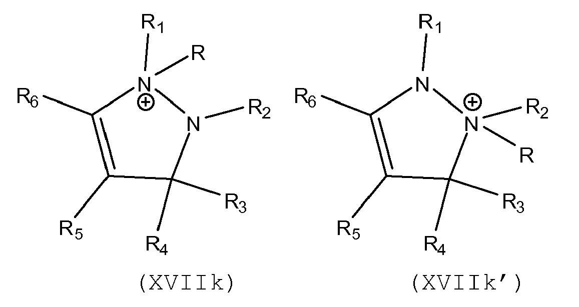
- R₁ und R₂ unabhängig voneinander Wasserstoff, Methyl, Ethyl oder Phenyl sind und R₃ bis R₆ unabhängig voneinander Wasserstoff oder Methyl sind.

In Betracht kommen daneben ionische Flüssigkeiten, bei denen das Kation [A]⁺ ein Imidazoliniumion (XVIIl) ist, bei dem 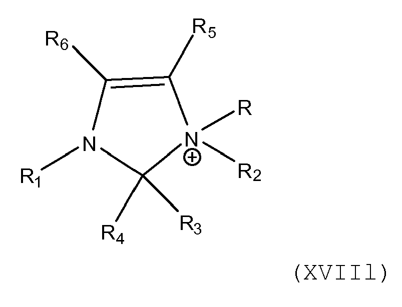
- R für H oder Methyl steht, R₁ und R₂ unabhängig voneinander Wasserstoff, Methyl oder Ethyl, oder ein linearer gesättigter oder ungesättigter Acylrest mit 14 bis 22, vorzugsweise 16 bis 18 Kohlenstoffatomen sind und R₃ bis R₆ unabhängig voneinander für Wasserstoff, einen linearen gesättigten, gegebenenfalls OH-Gruppen enthaltenden Alkylrest mit 1 - 4 Kohlenstoffatomen stehen, bevorzugt Methyl oder ein Fettsäurerest ist,; insbesondere bevorzugt sind R₁ und R₂ Fettsäureacylreste, sowie R oder R₂ und R₃ Fettsäureacylreste. Von besonderer Bedeutung sind die Substanzen entsprechend Formel (XVIIm). Teilweise sind in der Literatur hierfür auch irreführende Formeln (analog Formel XVIIm' oder XVIIl) eingeführt.

In Betracht kommen außerdem ionische Flüssigkeiten, bei denen das Kation [A]⁺ ein Imidazoliniumion (XVIIm) beziehungsweise (XVIIm') ist, bei dem 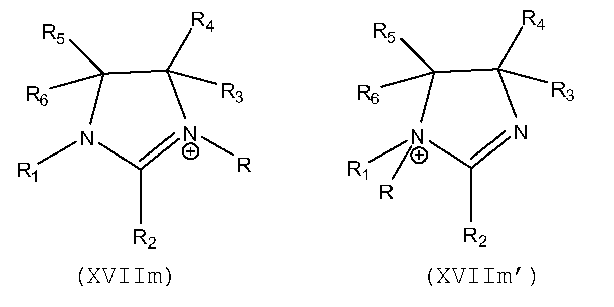
- R für H oder Methyl steht, R₁ und R₂ unabhängig voneinander Wasserstoff, Methyl oder Ethyl, oder ein linearer gesättigter oder ungesättigter Acylrest mit 14 bis 22, vorzugsweise 16 bis 18 Kohlenstoffatomen sind und R₃ bis R₆ unabhängig voneinander für Wasserstoff, einen linearen gesättigten, gegebenenfalls OH-Gruppen enthaltenden Alkylrest mit 1 - 4 Kohlenstoffatomen stehen, bevorzugt Methyl oder ein Fettsäurerest ist,; insbesondere bevorzugt sind R₁ und R₂ Fettsäureacylreste, sowie R oder R₂ und R₃ Fettsäureacylreste. Von besonderer Bedeutung sind die Substanzen entsprechend Formel (XIIIm). Teilweise sind in der Literatur hierfür auch irreführende Formeln (analog Formel XIIIm' oder XIIIl) eingeführt.

In Betracht kommen weiterhin ionische Flüssigkeiten, bei denen das Kation [A]⁺ ein Imidazoliniumion (XVIIn) beziehungsweise (XVIIn') ist, bei dem 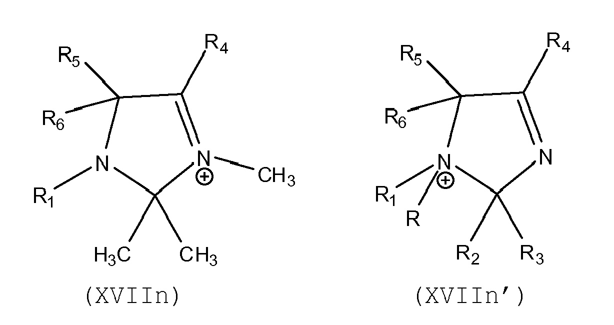
- R₁ bis R₃ unabhängig voneinander Wasserstoff, Methyl oder Ethyl sind und R₄ bis R₆ unabhängig voneinander Wasserstoff oder Methyl sind.

In Betracht kommen daneben ionische Flüssigkeiten, bei denen das Kation [A]⁺ ein Thiazoliumion (XVIIo) beziehungsweise (XVIIo') sowie als Oxazoliumion (XVIIp) ist, bei dem 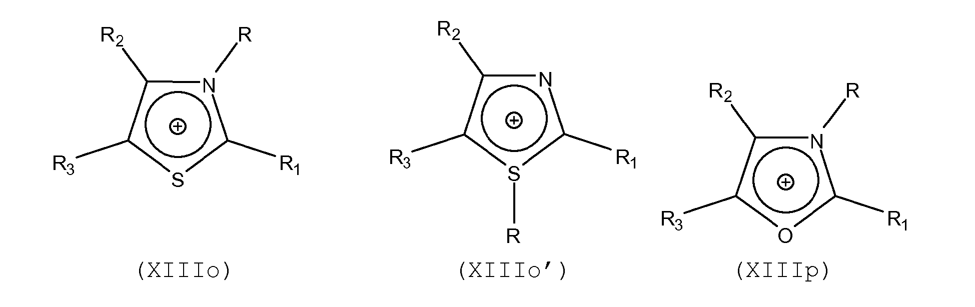
- R₁ Wasserstoff, Methyl, Ethyl oder Phenyl ist und R₂ und R₃ unabhängig voneinander Wasserstoff oder Methyl sind.

In Betracht kommen auch ionische Flüssigkeiten, bei denen das Kation [A]⁺ ein 1,2,4-Triazoliumion (XVIIq), (XVIIq') beziehungsweise (XVIIq") ist, bei dem 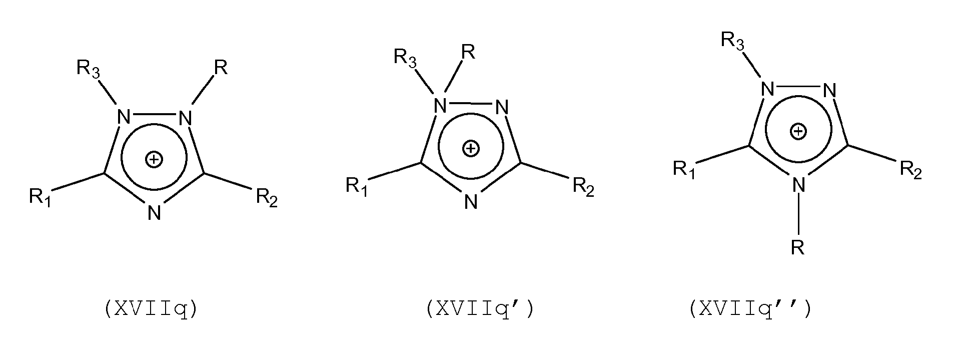
- R₁ und R₂ unabhängig voneinander Wasserstoff, Methyl, Ethyl oder Phenyl sind und R₃ Wasserstoff, Methyl oder Phenyl ist.

In Betracht kommen weiterhin ionische Flüssigkeiten, bei denen das Kation [A]⁺ ein 1,2,3-Triazoliumion (XVIIr), (XVIIr') beziehungsweise (XVIIr") ist, bei dem 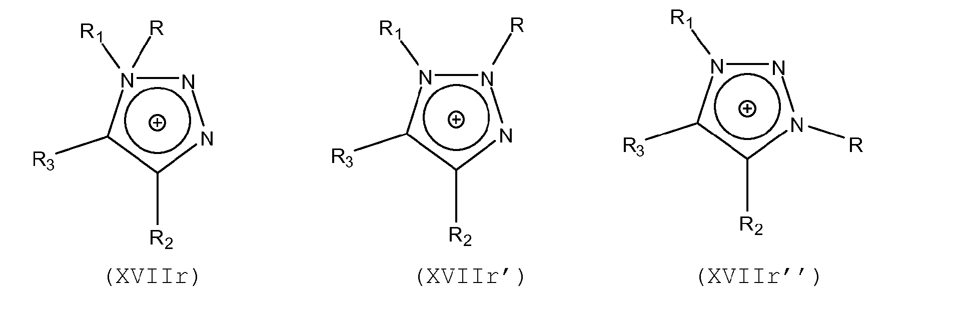
- R₁ Wasserstoff, Methyl oder Ethyl ist und R₂ und R₃ unabhängig voneinander Wasserstoff oder Methyl sind, oder R₂ und R₃ zusammen 1 ,4-Buta-1 ,3-dienylen ist.

In Betracht kommen zudem ionische Flüssigkeiten, bei denen das Kation [A]⁺ ein Pyrrolidiniumion (XVIIs) ist, bei dem 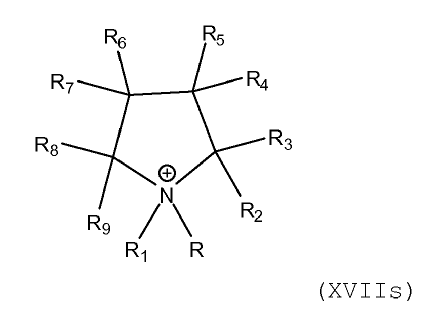
- R₁ Wasserstoff, Methyl, Ethyl oder Phenyl ist und R₂ bis R₉ unabhängig voneinander Wasserstoff oder Methyl sind.

In Betracht kommen daneben ionische Flüssigkeiten, bei denen das Kation [A]⁺ ein Imidazolidiniumion (XVIIt) ist, bei dem 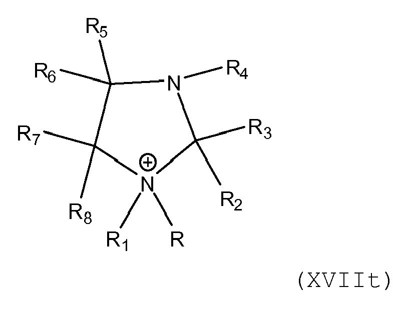
- R₁ und R₄ unabhängig voneinander Wasserstoff, Methyl, Ethyl oder Phenyl sind und R₂ und R₃ sowie R₅ bis R₈ unabhängig voneinander Wasserstoff oder Methyl sind.

In Betracht kommen auch ionische Flüssigkeiten, bei denen das Kation [A]⁺ ein Ammoniumion (IV) ist, bei dem 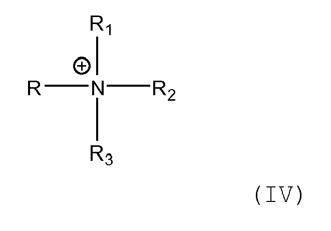
- R₁ bis R₃ unabhängig voneinander C₁-C₁₈-Alkyl sind; oder
- R₁ bis R₃ unabhängig voneinander Wasserstoff oder C C₁-C₁₈-Alkyl sind und R₄ 2-Hydroxyethyl ist; oder
- R₁ und R₂ zusammen 1,5-Pentylen oder 3-Oxa-1,5-pentylen sind und R₃ C₁-C₁₈-Alkyl, 2-Hydroxyethyl oder 2-Cyanoethyl ist.

Als besonders bevorzugte Ammoniumionen (IV) seien außerdem genannt Methyl-tri-(1-butyl)-ammonium, 2-Hydroxyethylammonium, Bis(2-hydroxyethyl)dimethlylammonium, N,N-Dimethylpiperidinium und N,N-Dimethylmorpholinium. Zudem kommen ionische Flüssigkeiten in Betracht, bei denen das Kation [A]⁺ ein Guanidiniumion (IVv) ist, bei dem 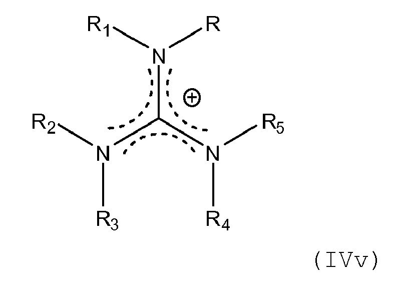
- R₁ bis R₅ Methyl sind.
- R₁ bis R₅ unabhängig voneinander C₁-C₁₈-Alkyl sind; oder
- R₁ bis R₅ unabhängig voneinander Wasserstoff oder C₁-C₁₈-Alkyl oder 2-Hydroxyethyl sind.

Als ganz besonders bevorzugtes Guanidiniumion (IVv) sei genannt N,N,N',N',N",N"- Hexamethylguanidinium.

In Betracht kommen auch ionische Flüssigkeiten, bei denen das Kation [A]⁺ ein Derivat eines Ethanolamins, z.B. ein Choliniumion (XVIIw), oder eines Diethanolamins (XVIIw'), oder eines Triethanolamins (XVIIw") ist, bei dem 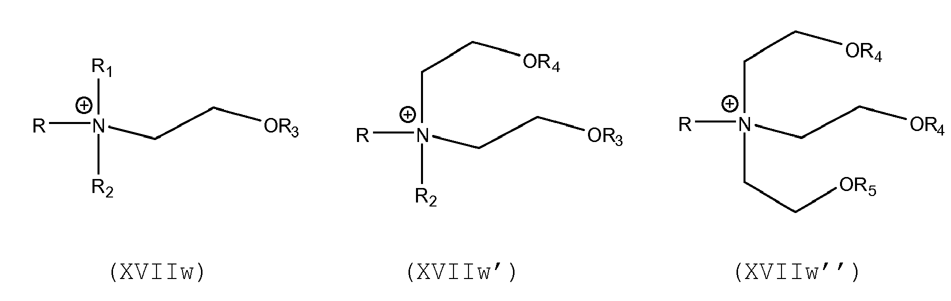
- R₁ und R₂ unabhängig voneinander Methyl, Ethyl, 1-Butyl oder 1-Octyl sind und R₃ Wasserstoff, Methyl, Ethyl, Acetyl, -SO₂OH oder -PO(OH)₂ ist;
- R₁ Methyl, Ethyl, 1-Butyl oder 1-Octyl ist, R₂ eine -CH₂-CH₂-OR₄-Gruppe ist und R₃ und R₄ unabhängig voneinander Wasserstoff, Methyl, Ethyl, Acetyl, -SO₂OH oder -PO(OH)₂ sind; oder
- R₁ eine -CH₂-CH₂-OR₄-Gruppe ist, R₂ eine -CH₂-CH₂-OR₅-Gruppe ist und R₃ bis R₅ unabhängig voneinander Wasserstoff, Methyl, Ethyl, Acetyl, -SO₂OH oder -PO(OH)₂ sind.
- R₁ Methyl, Ethyl, 1-Butyl, 1-Octyl, Acetyl, -SO₂OH, oder -PO(OH)₂ ist und R₃ bis R₅ unabhängig voneinander Wasserstoff, Methyl, Ethyl, Acetyl, -SO₂OH, -PO(OH)₂, oder -(CₙH₂ₙO)ₘR₁ mit n = 1 bis 5 und m = 1 bis 100 sind.
Bevorzugt sind außerdem Verbindungen in denen R, R₁ und R₂ Alkylgruppen mit 1 bis 4 Kohlenstoffatomen, besonders bevorzugt gleich einer Methylgruppe sind, und R₃ und/oder R₄ gesättigte oder ungesättigte Fettsäure- bzw. Acylreste mit 8 bis 22 Kohlenstoffatomen, bevorzugt 12 bis 18 KOhlenstoffatomen sind. Es können auch Mischungen der Acyl- oder Fettsäurerester (insbesondere beispielsweise in natürlich vorkommenden Verhältnissen) vorliegen.
Ganz besonders bevorzugt ist bei Formel (XVIIw") mit R, R₁, R₂ gleich einem Alkylrest mit 1 bis 4 Kohlenstofatomen, insbesondere Methylgruppen und R₃ gleich einem Fettsäurerest und R₄ und R₅ gleich einem Fettsäurerest oder gleich Wasserstoff.

In Betracht kommen ionische Flüssigkeiten, bei denen das Kation [A]⁺ ein Phosphoniumion (VI) ist, bei dem
- R₁ bis R₃ unabhängig voneinander C₁-C₁₈-Alkyl, insbesondere Butyl, Isobutyl, 1-Hexyl oder 1-Octyl sind.

Unter den vorstehend genannten Kationen sind die Pyridiniumionen (XVIIa), Imidazoliumionen (XVI) und Ammoniumionen (IV) bevorzugt, insbesondere 1-Methylpyridinium, 1-Ethyl-pyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methyl-pyridinium, 1-Methyl-2-ethylpyridinium, 1,2-Diethyl-pyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethyl-pyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethylpyridinium, 1-(1-Hexyl)-2- methyl-3-ethyl-pyridinium, 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium, 1-(1-Hexadecyl)-2-methyl-3-ethylpyridinium, 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Hexyl)-3-methyl-imidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methylimidazolium, 1, 2-Dimethylimidazolium, 1,2,3-Trimethylimidazolium, 1-Ethyl-2,3-dimethylimidazolium, 1-(1-Butyl)-2,3-dimethyl-imidazolium, 1-(1-Hexyl)-2,3-dimethyl-imidazolium und 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethyl-imidazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium und 2-Hydroxy-ethyl-ammonium.
Bei den in den Formeln (IIIa) bis (IIIj) genannten Metallkationen [M¹]⁺, [M²]⁺, [M³]⁺, [M⁴]²⁺ und [M⁵]³⁺ handelt es sich im Allgemeinen um Metallkationen der 1., 2., 6., 7., 8., 9., 10., 11., 12. und 13. Gruppe des Periodensystems. Geeignete Metallkationen sind beilspielsweise Li⁺, Na⁺, K⁺, Cs⁺, Mg²⁺, Ca²⁺, Ba²⁺, Cr³⁺, Fe²⁺, Fe³⁺, Co²⁺, Ni²⁺, Cu²⁺, Ag⁺, Zn²⁺ und Al³⁺.

Die erfindungsgemäß Verwendung findenden ionischen Flüssigkeiten bestehen aus mindestens einem der vorgenannten Kationen kombiniert mit jeweils mindestens einem Anion. Als Anionen kommen prinzipiell alle Anionen in Betracht, welche in Verbindung mit dem Kation zu einer ionische Flüssigkeit führen.
Das Anion [Y]ⁿ⁻ der ionischen Flüssigkeit ist beispielsweise ausgewählt aus:
- der Gruppe der Halogenide und halogenhaltigen Verbindungen der Formeln: F⁻ Cl⁻, Br⁻, I⁻, BF₄⁻, PF₆⁻, AlCl₄⁻, Al₂Cl₇⁻, Al₃Cl₁₀⁻, AlBr₄⁻, FeCl₄⁻, BCl₄⁻ SbF₆⁻, AsF₆⁻, ZnCl₃⁻, SnCl₃⁻, CuCl₂⁻, CF₃SO₃⁻, (CF₃SO₃)₂N⁻, CF₃CO₂⁻, CCl₃CO₂⁻, CN⁻, SCN⁻, OCN⁻, NO₂⁻, NO₃⁻, N(CN)⁻ ;
- der Gruppe der Sulfate, Sulfite und Sulfonate der allgemeinen Formeln: SO₄²⁻, HSO₄⁻, SO₃^{2"}, HSO₃⁻, R^{a}OSO₃⁻, R^{a}SO₃⁻;
- der Gruppe der Phosphate der allgemeinen Formeln: PO₄³⁻, HPO₄²⁻, H₂PO⁴⁻, R^{a}PO₄²⁻, HR^{a}PO₄⁻, R^{a}R^{b}PO₄⁻;
- der Gruppe der Phosphonate und Phosphinate der allgemeinen Formel: R^{a}HPO₃⁻, R^{a}R^{b}PO₂⁻, R^{a}R^{b}PO₃⁻;
- der Gruppe der Phosphite der allgemeinen Formeln: PO₃³⁻, HPO₃²⁻, H₂PO₃⁻, R^{a}PO₃²⁻, R^{a}HPO₃⁻, R^{a}R^{b}PO₃⁻;
- der Gruppe der Phosphonite und Phosphinite der allgemeinen Formel: R^{a}R^{b}PO₂⁻, R^{a}HPO₂⁻, R^{a}R^{b}PO⁻, R^{a}HPO⁻;
- der Gruppe der Carboxylate der allgemeinen Formeln: R^{a}COO⁻;
- der Gruppe der Borate der allgemeinen Formeln: BO₃³⁻, HBO₃²⁻, H₂BO₃⁻, R^{a}R^{b}BO₃⁻, R^{a}HBO₃⁻, R^{a}BO₃²⁻, B(OR^{a}) (OR^{b}) (OR^{c}) (OR^{d})⁻, B(HSO₄)⁻, B(R^{a}SO₄)⁻ ;
- der Gruppe der Boronate der allgemeinen Formeln: R^{a}BO₂²⁻, R^{a}R^{b}BO⁻;
- der Gruppe der Carbonate und Kohlensäureester der allgemeinen Formeln: HCO₃⁻, CO₃²⁻, R^{a}CO₃⁻;
- der Gruppe der Silikate und Kieselsäuresäureester der allgemeinen Formeln: SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻;
- der Gruppe der Alkyl- bzw. Arylsilan-Salze der allgemeinen Formeln: R^{a}SiO₃³⁻, R^{a}R^{b}SiO₂²⁻, R^{a}R^{b}R^{c}SiO⁻, R^{a}R^{b}R^{c}Si0₃⁻, R^{a}R^{b}R^{c}Si0₂⁻, R^{a}R^{b}Si0₃²⁻;
- der Gruppe der Carbonsäureimide, Bis(sulfonyl)imide und Sulfonylimide der allgemeinen Formeln: 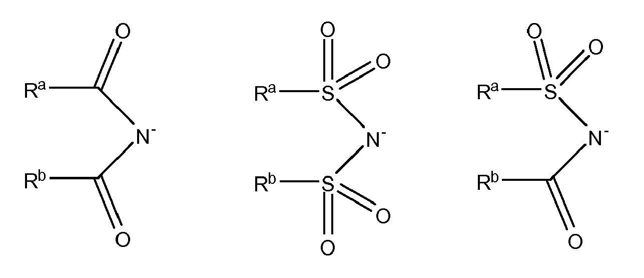
- der Gruppe der Methide der allgemeinen Formel: 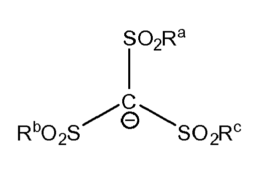
- der Gruppe der Alkoxide und Aryloxide der allgemeinen Formeln: R^{a}O⁻;
- der Gruppe der Halometallate der allgemeinen Formel [MᵣHalₜ]^{s-}, wobei M für ein Metall und Hal für Fluor, Chlor, Brom oder lod steht, r und t ganze positive Zahlen sind und die Stöchiometrie des Komplexes angeben und s eine ganze positive Zahl ist und die Ladung des Komplexes angibt;
- der Gruppe der Sulfide, Hydrogensulfide, Polysulfide, Hydrogenpolysulfide und Thiolate der allgemeinen Formeln:
   S²⁻, HS⁻, [Sᵥ]²⁻, [HS_{V}]⁻, [R^{a}S]⁻, wobei v eine ganze positive Zahl von 2 bis 10 ist;
- der Gruppe der komplexen Metallionen wie Fe(CN)₆³⁻, Fe(CN)₆⁴⁻, MnO₄⁻, Fe(CO)₄⁻.

Darin bedeuten R^{a}, R^{b}, R^{c} und R^{d} unabhängig voneinander jeweils
- Wasserstoff;
- C₁-C₃₀-Alkyl und deren aryl-, heteroaryl-, cycloalkyl, halogen-, hydroxy-, amino-, carboxy-, formyl-, -O-, -CO-, -CO-O- oder -CO-N< substituierte Komponenten, wie beispielsweise Methyl, Ethyl, 1-Propyl, 2-Propyl, 1-Butyl, 2-Butyl, 2-Methyl-1- propyl (Isobutyl), 2-Methyl-2-propyl (tert.-Butyl), 1-Pentyl, 2-Pentyl, 3-Pentyl, 2- Methyl-1-butyl, 3-Methyl-1-butyl, 2-Methyl-2-butyl, 3-Methyl-2-butyl, 2,2- Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2- pentyl, 2-Methyl-3-pentyl, 3-Methyl-3-pentyl, 2,2-Dimethyl-1-butyl, 2,3-Dimethyl- 1-butyl, 3,3-Dimethyl-1-butyl, 2-Ethyl-1-butyl, 2,3-Dimethyl-2-butyl, 3,3-Dimethyl- 2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder C_{q}F_{2(q-a)+(1-b)}H_{2a+b} mit q < 30, 0 ≤ a ≤ q und b = 0 oder 1 (beispielsweise CF₃, C₂F₅, CH₂CH₂-C_{(q-2)}F_{2(q-2)+1}, C₆F₁₃, C₈F₁₇, C₁₀F₂₁, C₁₂F₂₅);
- C₃-C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl O- der C_{q}F_{2(q-a)-(1-b)}H_{2a-b} mit q ≤ 30, 0 ≤ a ≤ q und b = 0 oder 1 ;
- C₂-C₃₀-Alkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 2-Propenyl, 3-Butenyl, cis-2-Butenyl, trans-2-Butenyl oder C_{q}F_{2(q-a)-(1-b)}H_{2a-b} mit q ≤ 30, 0 ≤ a ≤ q und b = 0 oder 1;
- C₃-C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5- Cyclohexadienyl oder C_{q}F_{2(q-a)-3(1-b})H_{2a-3b} mit q ≤ 30, 0 ≤ a ≤ q und b = 0 oder 1;
- Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-ToIyI), 3-Methyl-phenyl (3-ToIyI), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2- Pyridinyl, 3-Pyridinyl, 4-Pyridinyl oder C₆F₍₅₋ₐ₎Hₐ mit 0 ≤ a ≤ 5; oder
- zwei Reste einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

In Betracht kommende Anionen sind zum Beispiel Chlorid; Bromid; Iodid; Thiocyanat; Hexafluorophosphat; Trifluormethansulfonat; Methansulfonat; Formiat; Acetat; Glycolat; Lactat; Oxalat; Citrat; Malat; Maleat; Tartrat; Mandelat; Nitrat; Nitrit; Trifluoracetat; Sulfat; Hydrogensulfat; Methylsulfat; Ethylsulfat; 1-Propylsulfat; 1-Butylsulfat; 1-Hexylsulfat; 1-Octylsulfat; Phosphat; Dihydrogenphosphat; Hydrogenphosphat; C₁-C₄-Dialkylphosphate; Propionat; Tetrachloroaluminat; Al₂Cl₇⁻; Chlorozinkat; Chloroferrat; Bis(trifluoromethylsulfonyl)imid; Bis(pentafluoroethylsulfonyl) imid; Bis (methylsulfonyl) imid; Bis (p-Tolylsulfonyl)imid; Tris(trifluoromethylsulfonyl)methid; Bis (pentafluoroethylsulfonyl)methid; p-Tolylsulfonat; Tetracarbonylcobaltat; Dimethylenglykolmonomethylethersulfat; Oleat; Stearat; Acrylat; Methacrylat; Maleinat; Hydrogencitrat; Vinylphosphonat; Bis(pentafluoroethyl)phosphinat; Borate wie Bis[salicylato-(2-)]borat, Bis[oxalato(2-)]borat, Bis[1,2-benzoldiolato(2-)-O,O']borat, Tetracyanoborat, Tetrafluoroborat; Dicyanamid; Tris(pentafluoroethyl)trifluorophosphat; Tris(heptafluoropropyl)trifluorophosphat, cyclische Arylphosphate wie Brenzcatecholphosphat (C₆H₄O₂)P(O)O⁻ und Chlorocobaltat.

Bevorzugte Anionen werden ausgewählt aus der Gruppe - ohne Anspruch auf Vollständigkeit - der Halogenide, Bis(perfluoralkylsulfonyl)amide bzw. -imide wie z.B. Bis(trifluormethylylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat. Weiterhin sind Dicyanamid, Thiocyanat, Isothiocyanat, Tetraphenylborat, Tetrakis(pentafluorphenyl)borat, Tetrafluoroborat, Hexafluorophosphat, Polyetherphosphate und Phosphat.

Ganz besonders bevorzugte Anionen sind:
Chlorid, Bromid, Hydrogensulfat, Tetrachloroaluminat, Thiocyanat, Methylsulfat, Ethylsulfat, Methansulfonat, Formiat, Acetat, Glycolat, Lactat, Dimethylphosphat, Diethylphosphat, p-Tolylsulfonat, Tetrafluoroborat und Hexafluorophosphat.

Erfindungsgemäß in einer weiteren bevorzugten Ausführungsform werden solche ionische Flüssigkeiten bzw. deren Mischungen verwendet, die eine Kombination eines 1,3-Dialkylimidazolium-, 1,2,3-Trialkylimidazolium-, 1,3-Dialkylimidazolinium- und 1,2,3-Trialkylimidazoliniumkations mit einem Anion ausgesucht aus der Gruppe der Halogenide, Bis(trifluormethylylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat, Hexafluorophosphat, Acetat, Glycolat, Lactat enthalten.

Darüber hinaus können auch einfache, kommerziell erhältliche, acyclische quarternäre Ammoniumsalze wie z.B. TEGO^{®} IL T16ES, TEGO^{®} IL K5MS, TEGO^{®} IL DS oder auch TEGO^{®} IL 2MS (Produkte der Evonik Goldschmidt GmbH) eingesetzt werden.

Besonders bevorzugte ionische Flüssigkeiten im Rahmen dieser Offenbarung sind:
1-Butyl-3-methylimidazolium-2-(2-methoxyethoxy)ethylsulfat, 1-Butyl-3-methylimidazoliumacetat, 1-Ethyl-3-methylimidazolium acetat, Tetrabutylammoniumbenzoat, Trihexyltetradecylphosphonium-bis(2,4,4-trimethylpentyl)-phosphinat, 1-Ethyl-3-methylimidazolium bis(pentafluoroethylsulfonyl)imid, 1-Butyl-1-methylpyrrolidinium bis(trifluoromethylsulfonyl)imid, 1-Butyl-3-methylimidazolium-bis(trifluoromethylsulfonyl)imid, 1-Butyl-3-methylpyridinium-bis(trifluoromethylsulfonyl)imid, 1,2-Dimethyl-3-propylimidazolium bis(trifluoromethylsulfonyl)imid, 1-Ethyl-3-methylimidazolium bis(trifluoromethylsulfonyl)imid, 3-Methyl-1-propylpyridinium bis(trifluoromethylsulfonyl)imid, Methyltrioctylammonium bis(trifluoromethylsulfonyl)imid, Tetrabutylammonium bis(trifluoromethylsulfonyl)imid, Trihexyltetradecylphosphonium-bis(trifluoromethylsulfonyl)imid, 1-Butyl-1-methylpyrrolidiniumbromid, 1-Butylpyridiniumbromid, 1-Ethyl-3-methylimidazoliumbromid, 4-Methyl-N-butylpyridiniumbromid, Tetrabutylammoniumbromid, Tetrabutylphosphoniumbromid, Tetraheptylammoniumbromid, Tetrahexylammoniumbromid, Tetraoctylammoniumbromid, Tetraoctylphosphoniumbromid, Tetrapentylammoniumbromid, Tributylhexadecylphosphoniumbromid, 1-Allyl-3-methylimidazoliumchlorid, 1-Benzyl-3-methylimidazoliumchlorid, 1-Butyl-1-methylpyrrolidiniumchlorid, 1-Butyl-2,3-dimethylimidazoliumchlorid, 1-Butyl-3-methylimidazoliumchlorid, 1-Butyl-4-methylpyridiniumchlorid, 1-Ethyl-2,3-dimethylimidazoliumchlorid, 1-Ethyl-3-methylimidazoliumchlorid, 1-Hexyl-3-methylimidazolium chlorid, 1-Methyl-3-octylimidazoliumchlorid, Methylimidazoliumchlorid, Tetrabutylammoniumchlorid, Tetrabutylphosphoniumchlorid, Tetraheptylammoniumchlorid, Tetraoctylammoniumchlorid, Trihexyltetradecylphosphoniumchlorid, Butylammonium-α-cyano-4-hydrocinnamat, Diethylammonium-α-cyano-4-hydrocinnamat, Trihexyltetradecylphosphoniumdecanoat, 1-Butyl-1-methylpyrrolidiniumdicyanamid, 1-Butyl-3-methylimidazoliumdicyanamid, 1-Ethyl-3-methylimidazoliumdicyanamid, Trihexyltetradecylphosphoniumdicyanamid, 1-Ethyl-2,3-dimethylimidazoliumethylsulfat, 1-Ethyl-3-methylimidazoliumethylsulfat, 1-Benzyl-3-methylimidazoliumhexafluorophosphat, 1-Butyl-2,3-dimethylimidazoliumhexafluorophosphat, 1-Butyl-3-(3,3,...-tridecafluorooctyl)imidazoliumhexafluorophosphat, 1-Butyl-3-methylimidazoliumhexafluorophosphat, 1-Ethyl-3-methylimidazoliumhexafluorophosphat, 1-Hexyl-3-methylimidazoliumhexafluorophosphat, 1-Methyl-3-(3,3,...-tridecafluorooctyl)imidazoliumhexafluorophosphat, 1-Butyl-4-methylpyridiniumhexaflorophosphat, 1-Methyl-3-octylimidazoliumhexafluorophosphat, Trihexyltetradecylphosphoniumhexafluorophosphat, 1-Butyl-3-methylimidazoliumhydrogensulfat, 1-Ethyl-3-methylimidazoliumhydrogensulfat, Methylimidazoliumhydrogensulfat, 1-Dodecyl-3-methylimidazoliumhydrogensulfat, 1-Dodecyl-3-methylimidazoliumiodid, Tetrahexylammoniumiodid, 1-Butyl-3-methylimidazoliummethansulfonat, 1-Ethyl-3-methylimidazoliummethansulfonat, Tetrabutylammoniummethansulfonat, Tetrabutylphosphoniummethansulfonat, 1-Butyl-3-methylimidazoliummethylsulfat, 1,3-Dimethylimidazoliummethylsulfat, Methyltributylammoniummethylsulfat, 1-Ethyl-3-methylimidazoliummethylsulfat, 1,2,3-Trimethylimidazoliummethylsulfat, 1-Butyl-3-methylimidazoliumnitrat, 1-Ethyl-3-methylimidazoliumnitrat, Tetrabutylammoniumnonafluorobutansulfonat, Tetrabutylammoniumheptadecafluorooctansulfonat, 1-Butyl-3-methylimidazoliumoctylsulfat, 4-(3-Butyl-1-imidazolio)butan-1-sulfonat, 3-(Triphenylphosphonio)propan-1-sulfonat, 1-Butyl-3-methylimidazoliumtetrachloroaluminat, 1-Ethyl-3-methylimidazoliumtetrachloroaluminat, 1-Benzyl-3-methylimidazoliumtetrafluoroborat, 1-Butyl-2,3-dimethylimidazoliumtetrafluoroborat, 1-Butyl-3-methylimidazoliumtetrafluoroborat, 1-Ethyl-3-methylimidazoliumtetrafluoroborat, 1-Hexyl-3-methylimidazoliumtetrafluoroborat, 1-Methyl-3-octylimidazoliumtetrafluoroborat, 1-Butyl-1-methylpyrrolidiniumtetrafluoroborat, 1-Butyl-4-methylpyridiniumtetrafluoroborat, Tetrabutylammoniumtetrafluoroborat, Tetrahexylammoniumtetrafluoroborat, Tetrabutylphosphoniumtetrafluoroborat, Trihexyltetradecylphosphoniumtetrafluoroborat, 1-Butyl-3-methylimidazoliumthiocyanat, 1-Ethyl-3-methylimidazoliumthiocyanat, Tetrapentylammoniumthiocyanat, Trioctylmethylammoniumthiosalicylat, 1-Butyl-3-methylimidazoliumtosylat, 1-Ethyl-3-methylimidazoliumtosylat, Tetrabutylphosphoniumtosylat, Triisobutylmethylphosphoniumtosylat, 3-(Triphenylphosphonio)-propan-1-sulfonsäuretosylat, Tetraethylammoniumtrifluoroacetat, 4-(3-Butyl-1-imidazolio)-butan-1-sulfonsäuretrifluormethansulfonat, 1-Butyl-3-methylimidazoliumtrifluormethansulfonat, 1-Ethyl-2,3-dimethylimidazoliumtrifluormethansulfonat, 1-Ethyl-3-methylimidazoliumtrifluormethansulfonat, 1-Hexyl-3-methylimidazoliumtrifluormethansulfonat, 1-Methyl-3-octylimidazoliumtrifluormethansulfonat, Tetraethylammoniumtrifluormethansulfonat, 1,2,3-Trimethylimidazoliumtrifluormethansulfonat, 1-Hydroxyethyl-3-methylimidazolium-2-(2-methoxyethoxy)ethylsulfat, 1-Hydroxyethyl-3-methylimidazoliumacetat, 1-Hydroxyethyl-3-methylimidazoliumtrifluoracetat, 1-Hydroxyethyl-3-methylimidazolium-bis(trifluoromethylsulfonyl)imid, 1-Hydroxyethyl-3-methylimidazoliumbromid, 1-Hydroxyethyl-3-methylimidazoliumchlorid, 1-Hydroxyethyl-3-methylimidazolumdecanoat, 1-Hydroxyethyl-3-methylimidazoliumdicyanamid, 1-Hydroxyethyl-3-methylimidazoliumhexafluorophosphat, 1-Hydroxyethyl-3-methylimidazoliumhydrogensulfat, 1-Hydroxyethyl-3-methylimidazoliumiodid, 1-Hydroxyethyl-3-methylimidazoliummethansulfonat, 1-Hydroxyethyl-3-methylimidazoliummethylsulfat, 1-Hydroxyethyl-3-methylimidazoliumethylsulfat, 1-Hydroxyethyl-3-methylimidazoliumnitrat, 1-Hydroxyethyl-3-methylimidazoliumphosphat, 1-Hydroxyethyl-3-methylimidazoliumoctylsulfat, 1-Hydroxyethyl-3-methylimidazoliumtetrachloroaluminat, 1-Hydroxyethyl-3-methylimidazoliumtetrafluoroborat, 1-Hydroxyethyl-3-methylimidazoliumthiocyanat, 1-Hydroxyethyl-3-methylimidazolium-salicylat, 1-Hydroxyethyl-3-methylimidazoliumthiosalicylat, 1-Hydroxyethyl-3-methylimidazoliumtosylat, 1-Hydroxyethyl-3-methylimidazoliumtrifluormethansulfonat, 1-Hydroxyethyl-3-methylimidazoliumlactat, 1-Hydroxyethyl-3-methylimidazoliumglycolat, 1-Hydroxyethyl-3-methylimidazoliumcitrat, 1-Hydroxyethyl-3-methylimidazoliumoxalat, 1-Hydroxyethyl-3-methylimidazoliumtartrat, bis-(Hydroxyethyl)dimethylammoniumacetat, bis-(Hydroxyethyl)dimethylammoniumtrifluoracetat, bis-(Hydroxyethyl)dimethylammonium-bis(trifluoromethylsulfonyl)imid, bis-(Hydroxyethyl)dimethylammoniumbromid, bis-(Hydroxyethyl)dimethylammoniumchlorid, bis-(Hydroxyethyl)dimethylammoniumdecanoat, bis-(Hydroxyethyl)dimethylammoniumdicyanamid, bis-(Hydroxyethyl)dimethylammoniumhexafluorophosphat, bis-(Hydroxyethyl)dimethylammoniumhydrogensulfat, bis-(Hydroxyethyl)-dimethylammoniumiodid, bis-(Hydroxyethyl)dimethylammoniummethansulfonat, bis-(Hydroxyethyl)dimethylammoniummethylsulfat, bis-(Hydroxyethyl)dimethylammoniumethylsulfat, bis-(Hydroxyethyl)dimethylammoniumnitrat, bis-(Hydroxyethyl)dimethylammoniumphosphat, bis-(Hydroxyethyl)dimethylammoniumoctylsulfat, bis-(Hydroxyethyl)dimethylammoniumtetrachloroaluminat, bis-(Hydroxyethyl)-dimethylammoniumtetrafluoroborat, bis-(Hydroxyethyl)dimethylammoniumthiocyanat, bis-(Hydroxyethyl)dimethylammoniumsalicylat, bis-(Hydroxyethyl)dimethylammoniumthiosalicylat, bis-(Hydroxyethyl)dimethylammoniumtosylat, bis-(Hydroxyethyl)dimethylammoniumtrifluormethansulfonat, bis-(Hydroxyethyl)dimethylammoniumlactat, bis-(Hydroxyethyl)dimethylammoniumglycolat, bis-(Hydroxyethyl)dimethylammoniumcitrat, bis-(Hydroxyethyl)dimethylammoniumoxalat, bis-(Hydroxyethyl)dimethylammoniumtartrat.

Im Allgemeinen werden mit Mischungen, bestehend aus einem Mischungsverhältnis von ionischer Flüssigkeit zu Alkalimetallsalz im Bereich von 1 : 10 bis 10 : 1, deutliche Erniedrigungen der Oberflächenwiderstände erhalten. In einer solchen Mischung sollte das Alkalimetallsalz mit einem Anteil von 0,1 bis 75 Gew.-%, vorzugsweise mit einem Anteil von 0,5 bis 50 Gew.-%, besonders bevorzugt mit einem Anteil von 5 bis 30 Gew.-% enthalten sein.

Die erfindungsgemäss in dem Kunststein für Flächengebilde mit verwendeten Salze sind die auf diesem Gebiet üblicherweise verwendeten einfachen oder komplexen Verbindungen, wie beispielsweise insbesondere Alkalimetallsalze der Anionen: Bis (perfluoralkylsulfonyl) amid bzw. -imid wie z.B. Bis(trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat, vorzugsweise Anionen der Verbindungen Thiocyanat, Isothiocyanat, Dicyanamid, Tetraphenylborat, Tetrakis(pentafluorphenyl)borat, Tetrafluoroborat, Hexafluorophosphat, Phosphat und Polyetherphosphate.

Bevorzugte Mischungen sind insbesondere solche, die als Alkalimetallsalz NaSCN bzw. NaN(CN)₂ und KPF₆ und ein Imidazolinium- bzw. Imidazoliumsalz, vorzugsweise 1-Ethyl-3-methylimidazoliumethylsulfat, 1-Ethyl-3-methylimidazoliumhexafluoroposphat und als ionische Flüssigkeit 1-Ethyl-3-methylimidazoliumethylsulfat/NaN(CN)₂ oder 1-Ethyl-3-methylimidazoliumhexafluoroposphat/NaN(CN)₂.

Die vorliegende Erfindung sieht Varianten vor, bei denen die Inhaltsstoffmatrix des beanspruchten Kunststeins für Flächengebilde zu maximal 25 Gew.-% aus mindestens einer Polymermatrix enthaltend ein Polyurethan, Epoxidharz, Polyesterharz, Acrylat, Methacrylat und/oder Vinylester und einem reaktiven Silan besteht, z.B. Methacrylsilan. Im Unterschied zu Bodendickbeschichtungen sieht die vorliegende Erfindung vor, dass die Inhaltsstoffmatrix des Kunststeins mindestens zu 60 Gew.-% aus Festkörperabrieb, z.B. Marmor, Quarz oder Granit, beispielsweise aber auch Glas oder Porzellan oder auch festen Kunststoffen besteht. Außerdem sind Füllstoffe und/oder Pigmente enthalten, die vorzugsweise leitfähige Eigenschaften aufweisen. Hier kommen insbesondere Karbonfasern wie z. B. auf Basis von Polyacrylnitril (PAN), Pech und Reyon®, Graphit, Russ, Metalloxide und Metalllegierungsoxide in Frage. Ebenfalls geeignet sind Füllstoffe und Pigmente, die mit Komponenten beschichtet sind, die ihnen leitfähige Eigenschaften verleihen. Auch in diesem Fall sind Graphite, Russe und Metalloxide beziehungsweise Metalllegierungsoxide besonders geeignet.

Der fertig ausgehärtete Kunststein mit dem Festkörperabrieb in der Polymermatrix zeichnet sich dadurch aus, dass er mit den, dem Fachmann bekannten Methoden, gegebenenfalls geschliffen und/oder poliert werden kann um eine ästhetisch wünschenswerte Oberflächenstruktur erreichen zu können, ohne das die antistatischen Eigenschaften beeinträchtigt werden.
Der antistatisch auszustattende Kunststein zeichnet sich dadurch aus, dass sein spezifischer Widerstand bei Werten von 10¹¹ Ohm und höher und somit deutlich über den Widerständen von Bodendickbeschichtungen aus Kunststoff liegt.

Wird der Kunststein als Bodenfliese oder in Form einer Platte, beispielsweise einer Tischplatte, eingesetzt, kann das beanspruchte Flächengebilde eine Dicke aufweisen, die besonders bevorzugt zwischen 0,2 cm und 5 cm beträgt. Abhängig von der Anwendung kann die Schichtdicke des neuen Kunststeins eine Untergrenze von 0,2 cm aufweisen, wobei Obergrenzen von bis zu 100 cm, bevorzugt von 0,5 bis 10 cm und besonders bevorzugt 0,6 bis 5,0 cm ebenfalls als geeignet anzusehen sind.

Neben der Bodenfliese selbst umfasst die vorliegend Erfindung auch deren Verwendung im bauchemischen Bereich und insbesondere für Montagehallen und Gewerbebauten der Elektronik- und Elektroindustrie. Außerdem eignen sich die beanspruchten Kunststeine für Flächengebilde für Gebäude und ganz allgemein für Anwendungsbereiche, die mit Gefahren durch elektrostatische Aufladungen verbunden sind und die deshalb auch einen besonderen Explosionsschutz erfordern.

Insgesamt zeichnen sich die beschriebenen Kunststeine für Flächengebilde dadurch aus, dass sie sich kaum mehr elektrostatisch aufladen, wobei sie insbesondere durch die passgenaue Kombination der in ihnen enthaltenen Additive mit weiteren leitfähigen Komponenten dem jeweiligen Verwendungszweck genau angepasst werden können. Aufgrund der spezifischen Inhaltsstoffe sind diese Kunststeine en preisgünstig herzustellen und auch in Anwendungsgebieten einsetzbar, für die bislang nur dünnschichtige Lacke als geeignet erschienen.
Ein weiterer Gegenstand der vorliegenden Erfindung ist auch der Kunststeinkleber, Putz oder Fugenmörtel, der gegebenenfalls neben dem auch in den Flächengebilden verwendeten Festkörperabrieb auch die antistatisch wirkende Zusammensetzung aus ionischer Flüssigkeit und gegebenenfalls Metallsalz enthalten kann.

Der für den Kunststein und gegebenenfalls auch für den Kunststeinkleber, Putz oder Fugenmörtel zu verwendende Festkörperabrieb zeichnet sich durch eine Korngröße zwischen 0,001 mm bis 20 mm, bevorzugt 0,01 mm bis 5 mm aus.

Die nachfolgenden Beispiele verdeutlichen die Vorteile der vorliegenden Erfindung.

Weitere Ausgestaltungen der erfindungsgemäßen Lehre ergeben sich aus den Ansprüchen, deren Offenbarungsgehalt vollumfänglich Teil dieser Beschreibung ist.

### Experimenteller Teil:

Die aufgeführten Beispiele dienen nur der Illustration, beschränken aber den Erfindungsgegenstand in keiner Weise. Prozentangaben oder Teile beziehen sich auf das Gewicht, soweit nicht anders explizit angegeben.

### Beispiele:

In den erfindungsgemässen Rezepturen 1 und 2 wurden Antistatikadditive der folgenden Zusammensetzung verwendet:

Die Mischungen aus ionischer Flüssigkeit und Leitsalz (Antistatika 3 und 4) wurden mit Hilfe eines Magnetrührers hergestellt.
Als Antistatikum 1 wurde die ionische Flüssigkeit 1-Ethyl-3-methylimidazoliumdicyanamid eingesetzt, als Antistatikum 2 **wurde die** ionische Flüssigkeit Bis-(2-hydroxyethyl)dimethylammoniummethansulfonat verwendet. Für das Antistatikum 3 wurden die Komponenten Ethyl-bis(polyethoxyethanol)talgalkylammoniumethylsulfat (Tego® IL T16ES) als ionische Flüssigkeit mit 5 Gew.-% Ammoniumthiocyanat als Leitsalz gemischt. Als Antistatikum 4 wurde eine Mischung, bestehend aus 1,3-Dimethylimidazoliummethylsulfat als ionische Flüssigkeit und 10 Gew.-% Ammoniumdicyanamid als Leitsalz eingesetzt. Die Mischung aus ionischer Flüssigkeit und Metallsalz kann in ihrer antistatischen Wirkung eine stärkere Wirkung haben als die Komponenten, bei ansonsten gleichen Mengenverhältnissen alleine. In diesen Fällen liegt eine synergistische Wirkung und entsprechend eine synergistische Mischung vor.

Die antistatische Formulierung wird vor der thermischen Aushärtung zur Mischung oder nach Aufschmelzen der Polymermischung unter Kneten hinzugegeben.

### Rezeptur 1:

78 Gew.-% Marmorabrieb
15 Gew.-% Polyesterharz (bestehend aus 98 Teilen Polyesterharz und 2 Teilen Meth(acryl)oxypropyltrimethoxysilan (MEMO))
5 Gew.-% Pigmente
2 Gew.-% Antistatikadditiv

Alle Komponenten werden in einem Kneter vor dem Aushärten des Polyesterharzes zusammengemischt und zu einer homogenen Masse verknetet. Danach wird die Masse ausgegossen und flächig, gegebenenfalls unter Zuhilfenahme von (Giess-)formen ausgestrichen und gegebenenfalls oberflächlich geglättet.
Nach dem Aushärten kann das Flächengebilde in Fliesen- oder Plattenform geschnitten werden.

Die Leitfähigkeit war deutlich erhöht, beziehungsweise der Oberflächenwiderstand deutlich erniedrigt im Vergleich zu einem Muster, das ohne Zusatz des Antistatikadditivs hergestellt wurde.

### Rezeptur 2:

77 Gew.-% Granitabrieb
15 Gew.-% Polyesterharz (bestehend aus 98 Teilen Polyesterharz und 2 Teilen MEMO)
5 Gew.-% Pigmente
3 Gew.-% Antistatikadditiv

Alle Komponenten werden in einem Kneter vor dem Aushärten des Polyesterharzes zusammengemischt und zu einer homogenen Masse verknetet. Danach wird die Masse ausgegossen und flächig, gegebenenfalls unter Zuhilfenahme von (Gieß-)formen ausgestrichen und gegebenenfalls oberflächlich geglättet.
Nach dem Aushärten kann das Flächengebilde in Fliesen- oder Plattenform geschnitten werden.

Die Leitfähigkeit war deutlich erhöht, beziehungsweise der Oberflächenwiderstand deutlich erniedrigt im Vergleich zu einem Muster, das ohne Zusatz des Antistatikadditivs hergestellt wurde.

### Vergleichsrezeptur:

80 Gew.-% Granitabrieb
1 5 Gew.-% Polyesterharz (bestehend aus 98 Teilen Polyesterharz und 2 Teilen MEMO)
5 Gew.-% Pigmente

Alle Komponenten werden in einem Kneter vor dem Aushärten des Polyesterharzes zusammengemischt und zu einer homogenen Masse verknetet. Danach wird die Masse ausgegossen und flächig, gegebenenfalls unter Zuhilfenahme von (Gieß)formen ausgestrichen und gegebenenfalls oberflächlich geglättet. Nach dem Aushärten kann das Flächengebilde in Fliesen- oder Plattenform geschnitten werden.

Die Leitfähigkeit war deutlich niedriger, beziehungsweise der Oberflächenwiderstand deutlich höher im Vergleich zu einem Muster, das mit Zusatz des Antistatikadditivs hergestellt wurde.

## Patentansprüche

1. Kunststeine für Flächengebilde, **dadurch gekennzeichnet, dass** sie eine antistatische Formulierung bestehend aus zumindest einer ionischen Flüssigkeiten oder Lösungen von Metallsalzen in ionischen Flüssigkeiten enthalten.

2. Kunststeine für Flächengebilde nach Anspruch 1, **dadurch gekennzeichnet, dass** die ionische Flüssigkeit aus mindestens einem Kation der allgemeinen Formeln (IV), (V), (VI), (VII) oder (VIII),
R¹R²R³R⁴N⁺ (IV)
R¹R²N⁺=CR³R⁴ (V)
R¹R²R³R⁴P⁺ (VI)
R¹R²P⁺=CR³R⁴ (VII)
R¹R²R³S⁺ (VIII)
besteht, in denen R¹, R² R³, R⁴ gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (O, NH, NR' mit R' gleich einem gegebenenfalls Doppelbindungen enthaltenden C₁-C₃₀-Alkylrest, insbesondere -CH₃) unterbrochenen linearen oder verzweigten gegebenenfalls Doppelbindungen enthaltenden aliphatischen Kohlenwasserstoffrest mit 2 bis 30 Kohlenstoffatomen, einen durch eine oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O₂)-O-, -O-S(O₂)-, -S(O₂)-NH-, -NH-S(O₂)-, -S(O₂)-N(CH₃)-, -N(CH₃)-S(O₂)-, unterbrochenen linearen oder verzweigten gegebenenfalls Doppelbindungen enthaltenden aliphatischen Kohlenwasserstoffrest mit 2 bis 30 Kohlenstoffatomen, einen endständig OH, OR', NH₂, N(H)R', N(R')₂, mit R' gleich einem gegebenenfalls Doppelbindungen enthaltenden C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether gemäss -(R⁵-O)-R⁶ bedeuten, wobei R⁵ ein 2 bis 4 Kohlenstoffatome enthaltender linearer oder verzweigter Kohlenwasserstoffrest, n 1 bis 100, ist und R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen gegebenenfalls Doppelbindungen enthaltenden cycloaliphatischen Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen, einem Alkylarylrest mit 7 bis 40 Kohlenstoffatomen ist.

3. Kunststeine für Flächengebilde gemäß zumindest einem der Ansprüche 1 oder 2, **dadurch gekennzeichnet, dass** die ionischen Flüssigkeiten mindestens ein Kation der allgemeinen Formeln (XIII), (XIV) und (XV) enthalten, wobei die heterocyclischen Ringe gegebenenfalls auch mehrere Hetereoatome enthalten können 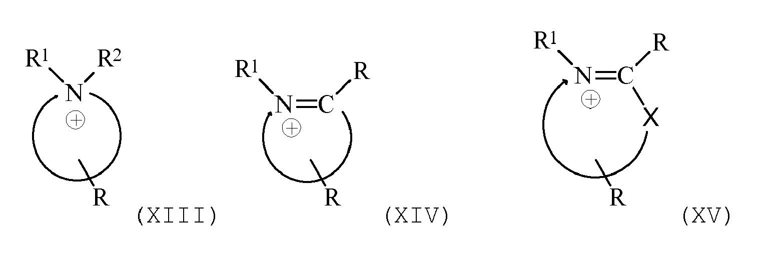
R¹ und R² besitzen dabei die vorgenannte Bedeutung,
R ist ein Wasserstoff, ein linearer oder verzweigter gegebenenfalls Doppelbindungen enthaltender aliphatischer Kohlenwasserstoffrest mit 1 bis 30 Kohlenstoffatomen, ein cyclo- aliphatischer gegebenenfalls Doppelbindungen enthaltender Kohlenwasserstoffrest mit 5 bis 40 Kohlenstoffatomen, ein aromatischer Kohlen- wasserstoffrest mit 6 bis 40 Kohlenstoffatomen oder ein Alkylarylrest mit 7 bis 40 Kohlen- stoffatomen.
X ist ein Sauerstoffatom, ein Schwefelatom oder ein substituiertes Stickstoffatom (X = O, S, NR¹).

4. Kunststeine für Flächengebilde nach Anspruch 1, **dadurch gekennzeichnet, dass** die ionischen Flüssigkeiten bestehend aus mindestens einem Kation der allgemeinen Formel (XVI) in der R⁸, R⁹, R¹⁰, R¹¹, R¹² gleich oder unterschiedlich sind und Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen, einen durch ein oder mehrere Heteroatome (O, NH, NR' mit R' gleich einem gegebenenfalls Doppelbindungen enthaltenden C₁-C₃₀-Alkylrest) , unterbrochenen linearen oder verzweigten gegebenenfalls Doppelbindungen enthaltenden aliphatischen Kohlenwasserstoffrest mit 1 bis 30 Kohlenstoffatomen, einen durch ein oder mehrere Funktionalitäten, ausgewählt aus der Gruppe -O-C(O)-, -(O)C-O-, -NH-C(O-, -(O)C-NH, -(CH₃)N-C(O)-, -(O)C-N(CH₃)-, -S (O)₂-O-, -O-S(O₂)-, -S(O₂) -NH-, -NH-S (O₂) -, -S (O₂) - N(CH₃)-, -N(CH₃)-S(O₂)-, unterbrochenen linearen oder verzweigten gegebenenfalls Doppelbindungen enthaltenden aliphatischen Kohlenwasserstoffrest mit 1 bis 30 Kohlenstoffatomen, einen endständig OH, OR', NH₂, N(H)R', N(R')₂ mit R' gleich einem gegebenenfalls Doppelbindungen enthaltenden C₁-C₃₀-Alkylrest, funktionalisierten linearen oder verzweigten gegebenenfalls Doppelbindungen enthaltenden aliphatischen oder cycloaliphatischen Kohlenwasserstoffrest mit 1 bis 30 Kohlenstoffatomen oder einen blockweise oder statistisch aufgebauten Polyether aufgebaut aus -(R⁵-O)ₙ-R⁶ bedeuten, wobei R⁵ ein 2 bis 4 Kohlenstoffatome enthaltender Kohlenwasserstoffrest, n 1 bis 100 ist und R⁶ Wasserstoff, einen linearen oder verzweigten gegebenenfalls Doppelbindungen enthaltenden aliphatischen Kohlenwasserstoffrest mit 1 bis 30 Kohlenstoffatomen, einen cycloaliphatischen gegebenenfalls Doppelbindungen enthaltenden Kohlenwasserstoffrest mit 5 bis 40 Kohlenstoffatomen, einen aromatischen Kohlenwasserstoffrest mit 6 bis 40 Kohlenstoffatomen, einen Alkylarylrest mit 7 bis 40 Kohlenstoffatomen bedeutet oder ein Rest -C(O)-R⁷ mit R⁷ gleich einem linearen oder verzweigten gegebenenfalls Doppelbindungen enthaltenden aliphatischen Kohlenwasserstoffrest mit 1 bis 30 Kohlenstoffatomen, einem gegebenenfalls Doppelbindungen enthaltenden cycloaliphatischen Kohlenwasserstoffrest mit 5 bis 40 Kohlenstoffatomen, einem aromatischen Kohlenwasserstoffrest mit 6 bis 40 Kohlenstoffatomen oder einem Alkylarylrest mit 7 bis 40 Kohlenstoffatomen ist.

5. Kunststeine für Flächengebilde nach einem der Ansprüche 1 bis 4, **dadurch gekennzeichnet, dass** die ionischen Flüssigkeiten mindestens ein Anion enthalten, ausgewählt aus der Gruppe der Halogenide, Bis(perfluoralkylsulfonyl)amide bzw. -imide, Bis(trifluormethylylsulfonyl)imid, Alkyl- und Aryltosylate, Perfluoralkyltosylate, Nitrat, Sulfat, Hydrogensulfat, Alkyl- und Arylsulfate, Polyethersulfate und/oder -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat, Saccharinat, Anionen der Verbindungen Dicyanamid, Thiocyanat, Isothiocyanat, Tetraphenylborat, Tetrakis(pentafluorphenyl)borat, Tetrafluoroborat, Hexafluorophosphat, Polyetherphosphate und/oder Phosphate.

6. Kunststeine für Flächengebilde nach zumindest einem der Ansprüche 1 bis 5, **dadurch gekennzeichnet, dass** die ionischen Flüssigkeiten mindestens ein Kation enthalten, ausgewählt aus der Gruppe 1,3-Dialkylimidazolium-, 1,2,3-Trialkylimidazolium-, 1,3-Dialkylimidazolinium- und/oder 1,2,3-Trialkylimidazoliniumkations und mindestens ein Anion enthalten, ausgesucht aus der Gruppe der Halogenide, Bis(trifluormethylylsulfonyl)imid, Perfluoralkyltosylate, Alkylsulfate und -sulfonate, perfluorierte Alkylsulfonate und -sulfate, Perfluoralkylcarboxylate, Perchlorat, Dicyanamid, Thiocyanat, Isothiocyanat, Tetraphenylborat, Tetrakis(pentafluorphenyl)borat, Tetrafluoroborat, Hexafluorophosphat und/oder acyclische quarternäre Ammoniumsalze.

7. Kunststeine für Flächengebilde nach zumindest einem der Ansprüche 1 bis 6, **dadurch gekennzeichnet, dass** die ionischen Flüssigkeiten mindestens ein Additiv in Form einer Verbindung, die die Löslichkeit des Kations verbessert, oder eines Komplexbildners enthalten, insbesondere einen Kronenether oder dessen Kryptanden und/oder EDTA.

8. Kunststeine für Flächengebilde nach zumindest einem der Ansprüche 1 bis 7, **dadurch gekennzeichnet, dass** in den ionischen Flüssigkeiten mindestens ein Metallsalz gelöst ist, ausgesucht aus der Gruppe der Alkalimetallsalze der Anionen: Bis(perfluoralkylsulfonyl) amid oder Bis (perfluoralkylsulfonyl) imid, Bis(trifluormethylsulfonyl)imid, Alkyl- und Aryltosylate, Pertluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Pertluoralkylcarboxylate, Perchlorat, Tetrarchloroaluminat, Saccharinat, Thiocyanat, Isothiocyanat, Dicyanamid, Tetraphenylborat, Tetrakis(pentafluorphenyl)borat, Tetrafluoroborat, Hexafluorophosphat, Phosphat und/oder Polyetherphosphat.

9. Kunststeine für Flächengebilde nach zumindest einem der Ansprüche 1 bis 8, **dadurch gekennzeichnet, dass** die Polymermatrix aus mindestens einem Polyurethan, Epoxidharz, Polyesterharz, Acrylat, Methacrylat und/oder Vinylester besteht.

10. Kunststeine für Flächengebilde gemäß zumindest einem der Ansprüche 1 bis 9, **dadurch gekennzeichnet, dass** der Kunststein als einen Bestandteil Festkörperabrieb aufweist.

11. Kunststeine für Flächengebilde gemäß Anspruch 10, **dadurch gekennzeichnet, dass** der Festkörperabrieb aus festen, natürlich auftretenden oder künstlich erzeugten, gegebenenfalls mikroskopisch heterogene Zusammensetzungen aus Mineralien, Gesteinsbruchstücken, Gläsern oder Rückständen von Organismen, oder auch künstlich hergestellte Gesteine oder auch Glas, Porzellan und Keramik in zerkleinerter Form, sowie Kunststoffen besteht und allein oder in beliebigen Mischungen miteinander, verwendet werden.

12. Kunststeine für Flächengebilde nach einem der Ansprüche 1 bis 11, **dadurch gekennzeichnet, dass** die Polymermatrix Füllstoffe und/oder Pigmente, leitfähige Stoffe, Karbonfasern, Graphit, Russ, Metall(legierungs-)oxide und/oder mit leitfähigen Stoffen beschichtete Füllstoffe und/oder Pigmente enthält.

13. Kunststeine für Flächengebilde nach einem der Ansprüche 1 bis 12, **dadurch gekennzeichnet, dass** sie die antistatische Komponente in Mengen zwischen 0,01 und 30 Gew.-% enthält.

14. Kunststeine für Flächengebilde nach einem der Ansprüche 1 bis 13, **dadurch gekennzeichnet, dass** sie eine Dicke bis 10 cm aufweisen.

15. Antistatisch ausgestatteter Kunststein nach zumindest einem der Ansprüche 11 bis 14, **dadurch gekennzeichnet, dass** sein spezifischer Oberflächenwiderstand bei Werten niedriger als 10¹⁰ Ohm liegt.

16. Verwendung der Kunststeine für Flächengebilde nach einem der Ansprüche 1 bis 15 im bauchemischen Bereich und insbesondere für Montagehallen und Gewerbebauten der Elektronik- und Elektroindustrie sowie Gebäude und Anwendungsbereiche, die Gefahren durch elektrostatische Aufladungen ausgesetzt sind.

17. Tischplatte umfassend einen Kunststein als Oberflächenfliese nach einem der Ansprüche 1 bis 16.

18. Tischplatte bestehend aus einem Kunststein nach einem der Ansprüche 1 bis 16.

19. Küchenarbeitsplatte umfassend einen Kunststein nach einem der Ansprüche 17 oder 18.

20. Verfahren zur Herstellung eines Kunststeins gemäß zumindest einem der Ansprüche 1 bis 15, **dadurch gekennzeichnet, dass** die Antistatikformulierung bestehend aus mindestens einer ionischen Flüssigkeit und gegebenenfalls mindestens einem Metallsalz vor der Aushärtung der Polymermatrix zusammen mit dem Festkörperabrieb verknetet oder bei thermoplastischen Polymeren durch Aufschmelzen eingearbeitet wird.

21. Antistatisch ausgerüsteter Kunststeinkleber, Putz, Fugenfüllmörtel oder Fliesenkleber hergestellt unter Verwendung mindestens einer ionischen Flüssigkeit oder /und einer Lösung eines Metallsalzes in einer ionischen Flüssigkeit und gegebenenfalls Feststoffabrieb.
